(19) Europäisches Patentamt
European Patent Office
Office européen des brevets

(11) EP 3 438 231 B1

(12) EUROPEAN PATENT SPECIFICATION

(45) Date of publication and mention of the grant of the patent:
**02.08.2023 Bulletin 2023/31**

(21) Application number: **17775602.0**

(22) Date of filing: **31.03.2017**

(51) International Patent Classification (IPC):
***C10M 109/00*** (2006.01) ***C10M 111/04*** (2006.01)
***F16C 33/20*** (2006.01) ***C10N 20/04*** (2006.01)
***C10N 30/00*** (2006.01) ***C10N 30/06*** (2006.01)
***C10N 40/02*** (2006.01) ***C10N 40/34*** (2006.01)
***C10N 50/08*** (2006.01) ***C10M 107/28*** (2006.01)

(52) Cooperative Patent Classification (CPC):
**C10M 107/28; F16C 33/20;** C10N 2030/06; C10N 2030/58

(86) International application number:
**PCT/JP2017/013786**

(87) International publication number:
**WO 2017/171071 (05.10.2017 Gazette 2017/40)**

(54) **MATERIAL FOR SLIDE MECHANISMS COMPRISING A POLYMER BRUSH**

MATERIAL FÜR GLEITVORRICHTUNG MIT EINER POLYMERBÜRSTE

MATÉRIAU POUR MÉCANISMES DE GLISSEMENT COMPRENANT UN POLYMÈRE EN BROSSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2016 JP 2016073586**

(43) Date of publication of application:
**06.02.2019 Bulletin 2019/06**

(73) Proprietors:
- **Kyoto University**
  **Kyoto-shi, Kyoto 606-8501 (JP)**
- **National University Corporation Yokohama National University**
  **Yokohama-shi, Kanagawa 240-8501 (JP)**

(72) Inventors:
- **TSUJII, Yoshinobu**
  **Kyoto-shi**
  **Kyoto 606-8501 (JP)**
- **SAKAKIBARA, Keita**
  **Kyoto-shi**
  **Kyoto 606-8501 (JP)**
- **WATANABE, Hiroshi**
  **Kyoto-shi**
  **Kyoto 606-8501 (JP)**
- **KURIHARA, Kazue**
  **Sendai-shi**
  **Miyagi 980-8577 (JP)**
- **SATO, Takaya**
  **Tsuruoka-shi**
  **Yamagata 997-8511 (JP)**
- **NAKANO, Ken**
  **Yokohama-shi**
  **Kanagawa 240-8501 (JP)**

(74) Representative: **Zimmermann & Partner Patentanwälte mbB**
**Postfach 330 920**
**80069 München (DE)**

(56) References cited:
**WO-A1-2014/009059**
**WO-A1-2016/042912**
**JP-A- 2001 082 543**
**JP-A- 2012 056 165**
**JP-A- 2013 144 740**
**JP-A- 2014 145 401**
**JP-A- 2014 169 787**
**JP-A- 2014 514 583**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present disclosure relates to a lubricant and a soft and resilient tribology system material (an "SRT material").

### Background Art

At present, studies about high-level stratification of concentrated polymer brushes (CPBs) having excellent properties of high resilience, ultralow friction and biocompatibility are being advanced.

Further, realization of exponential thickening owing to innovation of surface formation technology and verification of macroscopically excellent tribology (a branch of science technology targeting at various problems relating to solid surface contact, friction, abrasion and lubrication) characteristics are being tried (Fig. 1).

The present inventors have produced a graft surface solid (CPB) formed of a homopolymer of poly(methyl methacrylate) (PMMA) through living radical polymerization (LRP) (PTL 1).

The graft surface solid is applicable to ultrahigh sensitivity sensors and/or high functional separation membranes.

The present inventors have produced a lubricant containing a polymer chain-grafted surface (CPB) (PTL 2). The lubricant, in which the thickness of the polymer chain layer is on the order of 10 to 100 nm, expresses low friction and is effective as a slide member that requires surface smoothness on the order of submicrons or nanometers.

The present inventors have produced a slide member having a slide surface formed of an ionic liquid structure-containing polymer graft chain layer (PTL 3). The slide member can be a low-friction slide member having a friction-reducing effect between slide surfaces and having persistence of the effect.

WO 2014/009059 A1 discloses polymer brushes obtainable from alkyl methacrylates via radical polymerization, and having a dry thickness of 150 nm, 250 nm and 350 nm, for improving the lubrication properties of an article surface.

### Citation List

#### Patent Literature

PTL 1: Japanese Patent 3422463 (JP-11-263819A)
PTL2: JP-2006-316169A
PTL 3: JP-2014-169787A

### Summary of Invention

#### Technical Problem

The present invention is disclosed in and by the appended claims.

The present invention provides a material for slide mechanisms comprising a thickened polymer brush, wherein the thickened polymer brush has a dry thickness of 500 nm or more, as defined in the appended claims.

It is provided an SRT material (lubricant) applicable to surfaces of machine elements such as bearings, seals and/or guides (guiding mechanisms) constituting movable parts of machines.

#### Solution to Problem

The present inventors have established a method of producing a concentrated polymer brush (hereinafter this may be referred to as "CPB") that has attained precision control and densification of brush structures by applying LRP to polymerization from a material surface, and applying the production to various material surfaces. The structure characteristics of CPB are that the flexible polymer chains in the CPB are fully stretched in a good solvent to be elongated and oriented in such a high degree as comparable to the chain length, therefore expressing large compression resistance, ultralow friction, definite size exclusion, biocompatibility and excellent mechanical properties.

Ultralow friction characteristics of CPB have been verified by microtribology measurement. However, the swollen thickness of CPB is generally a few hundred nm or so, and there is a room for improvement in application to rough surfaces of base materials (silicon substrates, glass substrates, various metal substrates, etc.) and in overcoming abrasive wear (a wearing phenomenon of surface abrasion owing to impurities existing between friction surfaces).

In already-existing techniques, there is a room for improvement in application of CPB to macro-scale techniques

(practicable techniques).

In the present invention, a thickened CPB is applied to a lubricant to thereby realize both resiliency and low friction that have been difficult in already-existing techniques, intending to attain life prolongation and energy saving of machine products.

First aspect disclosed: SRT material centering on thickened CPB

Item 1:

An SRT material containing a thickened polymer brush (thickened CPB).

Item 2:

The SRT material according to the above item 1, wherein the SRT material is for sliding mechanisms.

Item 3:

The SRT material according to the above item 1 or 2, wherein the thickened polymer brush (thickened CPB) is thickened to have a thickness of 500 nm or more and has a molecular weight distribution index of 1.5 or less.

As an example of thickening to 500 nm or more, the thickened CPB can be thickened to have a thickness of 600 nm to 5 $\mu$m or so.

Item 4:

The SRT material according to any of the above items 1 to 3, wherein the indentation is 100 nm or more and the compressive elasticity modulus is 1 MPa or more.

Item 5:

The SRT material according to any of the above items 1 to 4, wherein the thickened polymer brush (thickened CPB) has a crosslinked structure.

Item 6:

The SRT material according to any of the above items 1 to 5, containing a lubricating liquid and having a frictional coefficient ($\mu$) of 0.1 or less.

Preferably, the frictional coefficient ($\mu$) of the SRT material is 0.01 or less.

Second aspect disclosed: SRT material centering on "physical data"

Item 7:

An SRT material having a compressive elasticity modulus of 1 MPa or more and a frictional coefficient ($\mu$) of 0.1 or less.

As the concept of the invention thereof, the SRT material of the present invention that satisfies the above-mentioned compressive elasticity modulus and frictional coefficient ($\mu$) does not always need to contain a thickened CPB.

Item 8:

The SRT material according to the above item 7, containing at least one selected from the group consisting of a thickened polymer brush and a component capable of expressing a CPB effect.

Explanation of terms used in the disclosure

The SRT material (in a narrow sense of the word) is one embodiment of a lubricant (in a wide sense of the word). The SRT material as one embodiment of a lubricant is effective for use for bearings, seals or guides (guiding mechanisms).

Degree of Thickening and Molecular Weight Distribution Index of Thickened CPB

The thickened CPB for use for the SRT material can be synthesized through surface-initiated living radical polymerization under the condition of high pressure, an ionic liquid solvent or a combination thereof. In doing so, when a free initiator is added to the polymerization solution, a free polymer having a molecular weight and a molecular weight distribution on the same level as those of a polymer brush constituent chain can be obtained.

Using size exclusion chromatography, the free polymer may be analyzed to determine the number-average molecular weight and the molecular weight distribution index thereof.

Indentation and Compressive Elasticity Modulus of SRT Material

The indentation and the compressive elasticity modulus of the SRT material can be measured according to a nanoindentation method or an atomic force microscope (AFM) colloid probe method.

In the nanoindentation method, for example, Nanomechanics iMicro (sensor: inForce 50) is used.

In the AFM colloid probe method, for example, a silica probe particle having a diameter of 10 μm is immobilized at the tip of an AFM cantilever, and using AFM available from JPK Instruments or AFM available from Seiko Instruments, a thickened CPB (example: thickened PMMA brush) formed on a silicon substrate is analyzed to for force curve measurement.

Crosslinked Structure of Thickened CPB

The crosslinked structure includes a physical crosslinked structure and a chemical crosslinked structure. In experimental cases, a chemical crosslinked structure is preferred. The crosslinked structure of a thickened CPB controls the elasticity modulus of the thickened CPB.

For the crosslinked structure, a method of introducing physical crosslinking or chemical crosslinking is useful at any time of polymer brush formation (referred to as in-side crosslinking during polymerization) as well as during post-polymerization (at post-crosslinking).

Frictional Coefficient (μ) of SRT Material

In a ball-on-disc test, for example, a tribometer UMT TriboLab available from Bruker is used. A thickened CPB is analyzed in a good solvent under a load ($F_n$) of 0.1 to 40 N and at a rotation speed of 10 to 2000 rpm to measure the friction force ($F_s$) thereof. The frictional coefficient (μ) is defined as a ratio of $F_s$ to $F_n$ ($F_s/F_n$).

Durability of SRT Material

In DEME-TFSI, thickened CPBs are slide to each other for a distance of about 1200 m under a load of 1 to 10 N kept applied thereto.

In a ball-on-disc test, the side facing the ball (always slide face side) is also evaluated.

Advantageous Effects of Invention

The present invention is an SRT material (lubricant) that has realized high-level multi-layering and hierarchizing of thickened CPB having excellent properties of high resilience and ultralow friction. Further, the present invention has realized exponential thickening owing to innovation of surface formation technology and has verified macroscopically excellent tribology characteristics.

The SRT material of the present invention has a compressive elasticity modulus of 1 MPa or more and has a frictional coefficient (μ) of 0.1 or less.

The lubricant and the SRT material of the present invention are applicable to practical machine systems as slide members such as bearings, seals or guides (guiding mechanisms).

Brief Description of Drawings

[Fig. 1] This is a schematic view showing that realization of exponential thickening owing to innovation of surface formation technology along with verification of macroscopically excellent tribology characteristics is being attempted.

[Fig. 2] This is a schematic view showing realization of CPB systems and expression of innovative functions.

[Fig. 3] This is a schematic view showing high-resilient characteristics of swollen CPB layers.
[Fig. 4] This is a schematic view showing ultralow friction/high lubricity of swollen CPB layers.
[Fig. 5] This is a schematic view showing problems and possibility in practical surfaces (application to macroscopic contact systems).
[Fig. 6] This is a schematic view showing problems and possibility in practical surfaces (application to macroscopic contact systems).
[Fig. 7] This is a schematic view showing innovation of machine element technology by CPB.
[Fig. 8] This is a schematic view showing a paradigm shift of the present invention.
[Fig. 9] This is a schematic view showing resiliency of CPB that creates durability of slide surfaces.
[Fig. 10] This is a schematic view showing comparison of characteristics of hard materials and soft (brush, gel) materials.
[Fig. 11] This is a schematic view showing industrial applicability of the present invention.
[Fig. 12] This is a schematic view showing one example of a polymer chain that forms an SRT material.
[Fig. 13] This is a schematic view (cross-sectional view) showing one example of a polymer chain that forms an SRT material.
[Fig. 14] This is a graph showing an embodiment of the present invention.
[Fig. 15] This is a graph showing an embodiment of the present invention.
[Fig. 16] This is a schematic view showing a ball-on-test with a tribometer (Bruker UMT TriboLab) for obtaining a stribeck curve.
[Fig. 17] This shows a stribeck curve (load: 0.1 to 4 N) of thickened PPMA brushes in an ionic liquid (DEME-TFSI).
[Fig. 18] This shows a stribeck curve (high load condition) of thickened PPMA brushes in an ionic liquid (DEME-TFSI).
[Fig. 19] This shows a stribeck curve (load: 5 N)) of thickened poly(N,N-diethyl-N-(2-methacryloylethyl)-N-methylammonium bis(trifluoromethylsulfonyl)imide) (PDEMM-TFSI: ionic liquid type) brushes in an ionic liquid (DEME-TFSI).
[Fig. 20] This shows stribeck curve data comparison between thickened PMMA brushes and thickened PDEMM-TFSI (ionic liquid type) brushes in an ionic liquid (DEME-TFSI).
[Fig. 21] This shows a stribeck curve (load: 0.1 N) of thickened poly(lauryl methacrylate) (PLMA) (lipophilic) brushes in three kinds of POE lubricating oils.
[Fig. 22] This shows measurement results of compressive elasticity modulus of thickened PMMA brushes in an ionic liquid (DEME-TFSI) obtained according to a nanoindentation method.
[Fig. 23] This shows results of a force curve test of thickened PMMA brushes in an ionic liquid (DEME-TFSI) obtained according to an atomic force microscope colloid probe method.
[Fig. 24] This shows an influence of a crosslinking agent concentration on the swelling degree of crosslinked brushes.

Description of Embodiments

In the present invention, a thickened concentrated polymer brush (thickened CPB) was produced according to a high-degree living radical polymerization (LRP) method. The thickened CPB effectively functions also in a macroscopic system, that is, in a practical lubrication system influenced by various machine elements.
The SRT material of the present invention provides a soft and resilient tribosystem (system of tribological components) (comprehensive sliding system with highly-controlled friction and lubrication), as a lubricant for bearings, a lubricant for seals and/or a lubricant for guides (guiding mechanisms).
The technology that includes the thickened CPB leads to a slide member provided with flexibility and ultralow friction (Fig. 2). Fig. 2 shows realization of CPB systems and expression of innovative functions.

SRT Material

The present invention provides a soft and resilient tribology system material (hereinafter this may be referred to as "SRT material") that takes advantage of resiliency derived from flexibility and low-friction performance of CPB.
The SRT material of the present invention is a machine element technology that takes advantage of the characteristics of soft materials, and includes CPB provided with high lubricity. The SRT material of the present invention is, from the viewpoint of large deformation performance, flexibility (followability) and resiliency (recovery performance), applicable to machines as a base material in tribology (a field of scientific technology targeted to various problems relating to contact, friction, abrasion and lubrication of solid surfaces).
Heretofore, a lubricant has an important technical problem for enhancing resiliency under low-viscosity, low-speed and high-load conditions.
Regarding the SRT material (lubricant) of the present invention, the present inventors have attained thickening CPB (to a thickness of 500 nm or more) and have succeeded for the first time in obtaining a stribeck curve intrinsic to

CPB in macroscopic measurement by applying a condition of a high pressure, an ionic liquid solvent or a combination thereof to CPB synthesis.

The stribeck curve indicates the influences of the viscosity, the mean speed and the vertical load of a lubricant on the frictional coefficient of a lubricative surface, and has a relation to lubrication mechanisms to give fundamental data in machine planning.

The frictional coefficient of the thickened CPB of the present invention remarkably lowers in a low-speed range as compared with that of a non-brush material, and the value thereof reached a level on the order of $10^{-3}$ (ultralow friction). Further, the thickened CPB of the present invention is worn little even after a friction test, and by thickening it, a practical CPB can be produced (flexibility and resiliency).

The thickened CPB of the present invention is practically usable as an SRT material (lubricant and slide member).

(1) SRT Material Containing Thickened CPB

A SRT material is preferably for sliding mechanisms.

The SRT material of the present invention (in a narrow sense of the word) is one embodiment of a lubricant (in a broad sense of the word).

The SRT material of the present invention as one embodiment of a lubricant is effective for use for bearings, seals or guides (guiding mechanisms) (namely, for bearings, seals or guides (guiding mechanisms)).

Preferably, the thickened CPB contained is thickened to 500 nm or more, and has a molecular weight distribution index of 1.5 or less.

As an example of thickening of the thickened CPB to 500 nm or more, thickening to 800 nm or so is possible.

Preferably, the SRT material (lubricant) has an indentation of 100 nm or more and a compressive elasticity modulus of 1 MPa or more.

Preferably, the thickened CPB contained has a crosslinked structure.

Preferably, the SRT material (lubricant) contains a lubricating liquid and has a frictional coefficient ($\mu$) of 0.1 or less. Preferably, the SRT material has the frictional coefficient ($\mu$) of 0.01 or less.

(1-1) Polymer to Form Thickened CPB

Preferably, the polymer chain to form the thickened CPB is a non-electrolyte polymer or an electrolyte polymer, or a hydrophobic polymer or a hydrophilic polymer.

As the non-electrolyte polymer, a poly(methyl methacrylate) (hereinafter this may be referred to as "PMMA") is preferred.

As the electrolyte polymer, PSGMA (poly(sodium sulfonated glycidyl methacrylate)) and an ionic liquid polymer are preferred.

As the hydrophobic polymer, a poly(alkyl methacrylate) such as PMMA is preferred.

As the hydrophilic polymer, a poly(hydroxyalkyl (meth)acrylate) such as poly(2-hydroxyethyl methacrylate) (PHEMA), or a poly(meth)acrylate having a polyethylene glycol side chain is preferred.

The hydrophilic polymer may be prepared using a hydrophilic monomer, or may be prepared by introducing a hydrophilic group into a polymer prepared using a hydrophobic monomer.

Preferably, the polymer chain is formed through homopolymerization of one kind of monomer or is formed through copolymerization of two or more kinds of monomers.

The copolymerization includes random copolymerization, block copolymerization and gradient copolymerization.

Preferably, the monomer for use in polymer chain formation is one capable of forming a grafting polymer chain (on a substrate surface). Preferred is a monomer having at least one addition-polymerizable double bond such as a monofunctional monomer having one addition-polymerizable double bond. As the monofunctional monomer having one addition-polymerizable double bond, (meth)acrylic monomers and styrenic monomers are preferred.

Specifically, examples of the monomer for use for polymer chain formation include a (meth)acrylic monomer, a styrenic monomer, a monofunctional monomer having one addition-polymerizable double bond, a hydrophobic monomer, a hydrophilic monomer, and a monomer having, in the side chain thereof, a group that may be readily converted into a carboxyl group or a carboxylate group, which are exemplified hereinunder.

As the monomer for use for polymer chain formation, especially preferred are a hydrophobic monomer and a hydrophilic monomer.

As the (meth)acrylic monomer, preferred are (meth)acrylic acid, methyl (meth)acrylate, ethyl (meth)acrylate, propyl (meth)acrylate, isopropyl (meth)acrylate, butyl (meth)acrylate, isobutyl (meth)acrylate, tert-butyl (meth)acrylate, pentyl (meth)acrylate, hexyl (meth)acrylate, and cyclohexyl (meth)acrylate.

As the (meth)acrylic monomer, preferred are heptyl (meth)acrylate, octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, and benzyl (meth)acrylate.

As the (meth)acrylic monomer, preferred are 2-methoxyethyl (meth)acrylate, 3-methoxypropyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, and 3-ethyl-3-(meth)acryloyloxymethyloxetane.

As the (meth)acrylic monomer, preferred are 2-(meth)acryloyloxyethyl isocyanate, 2-aminoethyl (meth)acrylate, 2-(2-bromopropionyloxy)ethyl (meth)acrylate, and 2-(2-bromoisobutyryloxy)ethyl (meth)acrylate.

As the (meth)acrylic monomer, preferred are 1-(meth)acryloxy-2-phenyl-2-(2,2,6,6-tetramethyl-1-piperidinyloxy)ethane, 1-(4-((4-(meth)acryloxy)ethoxyethyl)phenylethoxy)piperidine, and γ-(methacryloyloxypropyl)trimethoxysilane.

As the (meth)acrylic monomer, preferred are 3-(3,5,7,9,11,13,15-heptaethylpentacyclo[9.5.1.13,9.15,15.17,13]octasiloxan-1-yl)propy 1 (meth)acrylate, 3-(3,5,7,9,11,13,15-heptaisobutyl-pentacyclo[9.5.1.13,9.15,15.17,13]octasiloxan-1-yl)pr opyl (meth)acrylate, and 3-(3,5,7,9,11,13,15-heptaisooctylpentacyclo[9.5.1.13,9.15,15.17,13]octasiloxan-l-yl)pr opyl (meth)acrylate.

As the (meth)acrylic monomer, preferred are 3-(3,5,7,9,11,13,15-heptacyclopentylpentacyclo[9.5.1.13,9.15,15.17,13]octasiloxan-1-yl )propyl (meth)acrylate, 3-(3,5,7,9,11,13,15-heptaphenylpentacyclo[9.5.1.13,9.15,15.17,13]octasiloxan-1-yl)pro pyl (meth)acrylate, and 3-[(3,5,7,9,11,13,15-heptaethylpentacyclo[9.5.1.13,9.15,15.17,13]octasiloxan-1-yloxy)d imethylsilyl]propyl (meth)acrylate.

As the (meth)acrylic monomer, preferred are 3-[(3,5,7,9,11,13,15-heptaisobutylpentacyclo[9.5.1.13,9.15,15.17,13]octasiloxan-1-ylox y)dimethylsilyl]propyl (meth)acrylate, and 3-[(3,5,7,9,11,13,15-heptaisooctylpentacyclo[9.5.1.13,9.15,15.17,13]octasiloxan-1-ylox y)dimethylsilyl]propyl (meth)acrylate.

As the (meth)acrylic monomer, preferred are 3-[(3,5,7,9,11,13,15-heptacyclopentylpentacyclo[9.5.1.13,9.15,15.17,13]octasiloxan-1-y loxy)dimethylsilyl]propyl (meth)acrylate, and 3-[(3,5,7,9,11,13,15-pentaphenylpentacyclo[9.5.1.13,9.15,15.17,13]octasiloxan-1-yloxy )dimethylsilyl]propyl (meth)acrylate.

As the (meth)acrylic monomer, preferred are (meth)acrylic acid ethylene oxide adduct, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, trifluoromethyl (meth)acrylate, and diperfluoromethylmethyl (meth)acrylate.

As the (meth)acrylic monomer, preferred are 2-perfluoromethyl-2-perfluoroethylethyl (meth)acrylate, 2-perfluorohexyl ethyl (meth)acrylate, 2-perfluorodecylethyl (meth)acrylate, and 2-perfluorohexadecylethyl (meth)acrylate.

As the styrenic monomer, preferred are styrene, vinyltoluene, α-methylstyrene, p-chlorostyrene, p-chloromethylstyrene, m-chloromethylstyrene, o-aminostyrene, p-styrenechlorosulfonic acid, styrenesulfonic acid and its salts, vinylphenylmethyl dithiocarbamate, 2-(2-bromopropionyloxy)styrene, and 2-(2-bromoisobutyryloxy)styrene.

As the styrenic monomer, preferred are 1-(2-((4-vinylphenyl)methoxy)-1-phenylethoxy)-2,2,6,6-tetramethylpiperidine, 1-(4-vinylphenyl)-3,5,7,9,11,13,15-heptaethylpemtacyclo[9.5.1.13,9.15,15.17,13]octasil oxne, and 1-(4-vinylphenyl)-3,5,7,9,11,13,15-heptaisobutylpentacyclo[9.5.1.13,9.15,15.17,13]octa siloxne.

As the styrenic monomer, preferred are 1-(4-vinylphenyl)-3,5,7,9,11,13,15-heptaisooctylpentacyclo[9.5.1.13,9.15,15.17,13]octa siloxne, 1-(4-vinylphenyl)-3,5,7,9,11,13,15-heptacyclopentylpentacyclo[9.5.1.13,9.15,15.17,13] octasiloxne, and 1-(4-vinylphenyl)-3,5,7,9,11,13,15-heptaphenylpentacyclo[9.5.1.13,9.15,15.17,13]octas iloxne.

As the styrenic monomer, preferred are 3-(3,5,7,9,11,13,15-heptaethylpentacyclo[9.5.1.13,9.15,15.17,13]octasiloxan-1-yl)ethyls tyrene, 3-(3,5,7,9,11,13,15-heptaisobutylpentacyclo[9.5.1.13,9.15,15.17,13]octasiloxan-1-yl)et hylstyrene, and 3-(3,5,7,9,11,13,15-heptaisooctylpentacyclo[9.5.1.13,9.15,15.17,13]octasiloxan-1-yl)eth ylstyrene.

As the styrenic monomer, preferred are 3-(3,5,7,9,11,13,15-heptacyclopentylpentacyclo[9.5.1.13,9.15,15.17,13]octasiloxan-1-yl )ethylstyrene, 3-(3,5,7,9,11,13,15-heptaphenylpentacyclo[9.5.1.13,9.15,15.17,13]octasiloxan-1-yl)eth ylstyrene, and 3-((3,5,7,9,11,13,15-heptaethylpentacyclo[9.5.1.13,9.15,15.17,13]octasiloxan-1-yloxy)d imethylsilyl)ethylstyrene.

As the styrenic monomer, preferred are 3-((3,5,7,9,11,13,15-heptaisobutylpentacyclo[9.5.1.13,9.15,15.17,13]octasiloxan-1-ylox y)dimethylsilyl)ethylstyrene, and 3-((3,5,7,9,11,13,15-heptaisooctylpentacyclo[9.5.1.13,9.15,15.17,13]octasiloxan-1-ylox y)dimethylsilyl)ethylstyrene.

As the styrenic monomer, preferred are 3-((3,5,7,9,11,13,15-heptacyclopentylpentacyclo[9.5.1.13,9.15,15.17,13]octasiloxan-1-y loxy)dimethylsilyl)ethylstyrene, and 3-((3,5,7,9,11,13,15-heptaphenylpentacyclo[9.5.1.13,9.15,15.17,13]octasiloxan-1-yloxy )dimethylsilyl)ethylstyrene.

As the monofunctional monomer having one addition-polymerizable double bond, preferred are fluorine-containing vinyl monomers (e.g., perfluoroethylene, perfluoropropylene, vinylidene fluoride), silicon-containing vinyl monomers (e.g., vinyltrimethoxysilane, vinyltriethoxysilane), maleic anhydride, maleic acid, maleic monoalkyl esters and dialkyl esters, fumaric acid, and fumaric monoalkyl esters and dialkyl esters.

As the monofunctional monomer having one addition-polymerizable double bond, preferred are maleimide

monomers (e.g., maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide).

As the monofunctional monomer having one addition-polymerizable double bond, preferred are nitrile group-containing monomers (e.g., acrylonitrile, methacrylonitrile), amide group-containing monomers (e.g., acrylamide, methacrylamide), and vinyl ester monomers (e.g., vinyl acetate, vinyl propionate, vinyl pivalate, vinyl benzoate, vinyl cinnamate).

As the monofunctional monomer having one addition-polymerizable double bond, preferred are olefins (e.g., ethylene, propylene), conjugated dienic monomers (e.g., butadiene, isoprene), vinyl halides (e.g., vinyl chloride), vinylidene halides (e.g., vinylidene chloride), and allyl halides (e.g., allyl chloride).

As the monofunctional monomer having one addition-polymerizable double bond, preferred are allyl alcohol, vinylpyrrolidone, vinylpyridine, N-vinylcarbazole, methyl vinyl ketone, and vinyl isocyanate.

For example, preferred are macromonomers having one polymerizable double bond in one molecule, in which the main chain is derived from styrene, (meth)acrylates or siloxane.

As the hydrophobic monomer, preferred are acrylates (e.g., alkyl acrylates such as methyl acrylate, ethyl acrylate, propyl acrylate, butyl acrylate, cyclohexyl acrylate, and hexafluoroisopropyl acrylate; aryl acrylates such as phenyl acrylate; arylalkyl acrylates such as benzyl acrylate; and alkoxyalkyl acrylates such as methoxymethyl acrylate).

As the hydrophobic monomer, preferred are methacrylates (e.g., alkyl methacrylates such as methyl methacrylate, ethyl methacrylate, propyl methacrylate, butyl methacrylate, cyclohexyl methacrylate, hexafluoroisopropyl methacrylate; aryl methacrylates such as phenyl methacrylate; arylalkyl methacrylates such as benzyl methacrylate; and alkoxyalkyl methacrylates such as methoxymethyl methacrylate).

As the hydrophobic monomer, preferred are fumarates (e.g., alkyl fumarates such as dimethyl fumarate, diethyl fumarate, diallyl fumarate), and maleates (e.g., alkyl maleates such as dimethyl maleate, diethyl maleate, diallyl maleate).

As the hydrophobic monomer, preferred are itaconates (e.g., alkyl itaconates), crotonates (e.g., alkyl crotonates), methyl vinyl ether, ethoxyethyl vinyl ether, vinyl acetate, vinyl propionate, vinyl benzoate and styrene.

As the hydrophobic monomer, preferred are alkyl styrene, vinyl chloride, vinyl methyl ketone, vinyl stearate, vinyl alkyl ether, and mixtures thereof.

As the hydrophilic monomer, preferred are hydroxy-substituted alkyl acrylates (e.g., 2-hydroxyethyl acrylate, 2-hydroxypropyl acrylate, 3-hydroxypropyl acrylate, 2,3-dihydroxypropyl acrylate, polyethoxyethyl acrylate, polyethoxypropyl acrylate).

As the hydrophilic monomer, preferred are hydroxy-substituted alkyl methacrylates (e.g., 2-hydroxyethyl methacrylate, 2-hydroxypropyl methacrylate, 3-hydroxypropyl methacrylate, 2,3-dihydroxypropyl methacrylate, polyethoxyethyl methacrylate, polyethoxypropyl methacrylate).

As the hydrophilic monomer, preferred are acrylamide, N-alkylacrylamides (e.g., N-methylacrylamide, N,N-dimethylacrylamide), and N-alkylmethacrylamides (e.g., N-methylmethacrylamide).

As the hydrophilic monomer, preferred are polyethylene glycol monoacrylate, polyethylene glycol monomethacrylate, alkoxypolyethylene glycol acrylate, alkoxypolyethylene glycol methacrylate, phenoxypolyethylene glycol acrylate, phenoxypolyethylene glycol methacrylate, and 2-glucosiloxyethyl methacrylate.

As the hydrophilic monomer, preferred are acrylic acid, methacrylic acid, fumaric acid, maleic acid, itaconic acid, crotonic acid, methacrylamide, allyl alcohol, N-vinylpyrrolidone and N,N-dimethylaminoethyl acrylate, and mixtures thereof.

A monomer having a specific group in the side chain is also favorably used herein.

For example, a monomer having a group capable of being readily converted into a carboxyl group or a carboxylate group in the side chain thereof is preferred in that, after formed into a polymer, the side chain of the resultant polymer may be converted into a carboxyl group or a carboxylate group to give hydrophilicity to the polymer.

As the monomer having a group capable of being readily converted into a carboxyl group or a carboxylate group in the side chain thereof, for example, preferred are 1-methoxyethyl acrylate, 1-ethoxyethyl acrylate, 1-propoxyethyl acrylate, 1-(1-methylethoxy)ethyl acrylate, 1-butoxyethyl acrylate, 1-(2-methylpropoxy)ethyl acrylate, and 1-(2-ethylhexoxy)ethyl acrylate.

As the monomer having a group capable of being readily converted into a carboxyl group or a carboxylate group in the side chain thereof, preferred are pyranyl acrylate, 1-methoxyethyl methacrylate, 1-ethoxyethyl methacrylate, 1-propoxyethyl methacrylate, 1-(1-methylethoxy)ethyl methacrylate, 1-butoxyethyl methacrylate, 1-(2-methylpropoxy)ethyl methacrylate, and 1-(2-ethylhexoxy)ethyl methacrylate.

As the monomer having a group capable of being readily converted into a carboxyl group or a carboxylate group in the side chain thereof, preferred are pyranyl methacrylate, di-1-methoxyethyl maleate, di-1-ethoxyethyl maleate, di-1-propoxyethyl maleate, di-1-(1-methylethoxy)ethyl maleate, di-1-butoxyethyl maleate, di-1-(2-methylpropoxy)ethyl maleate, and dipyranyl maleate.

One alone or two or more kinds of monomers may be used for polymer chain formation, either singly or as combined.

Examples of the ionic liquid polymer include, though not specifically limited thereto, polymers produced through polymerization of a compound represented by the following general formula (1).

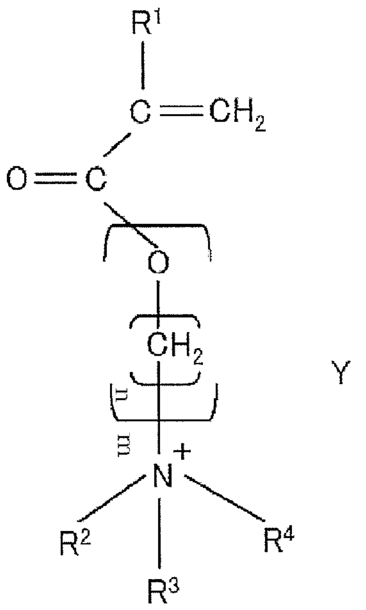

···(1)

wherein m represents an integer of 1 or more and 10 or less.
n represents an integer of 1 or more and 5 or less.
$R^1$ represents a hydrogen atom, or an alkyl group having 1 to 3 carbon atoms.
$R^2$, $R^3$ and $R^4$ each represent an alkyl group having 1 to 5 carbon atoms.
$R^2$, $R^3$ and $R^4$ each may contain one or more hetero atoms selected from an oxygen atom, a sulfur atom and a fluorine atom, and two or more of $R^2$, $R^3$ and $R^4$ may bond to each other to form a cyclic structure.
Y represents a monovalent anion.

The monovalent anion Y includes, though not specifically limited thereto, anions such as $BF_4^-$, $PF_6^-$, $AsF_6^-$, $SbF_6^-$, $AlCl_4^-$, $NbF_6^-$, $HSO_4^-$, $ClO_4^-$, $CH_3SO_3^-$, $CF_3SO_3^-$, $CF_3CO_2^-$, $(CF_3SO_2)_2N^-$, $Cl^-$, $Br^-$, and $I^-$. In consideration of the stability of the anion Y, the anion Y is especially preferably $BF_4^-$, $PF_6^-$, $(CF_3SO_2)_2N^-$, $CF_3SO_3^-$, or $CF_3CO_2^-$.

Among the compounds represented by the general formula (1), compounds represented by the following general formulae (2) to (9) are especially preferably used.

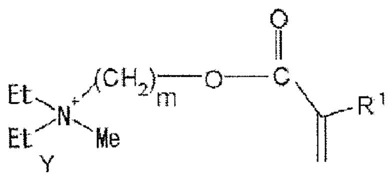

···(2)

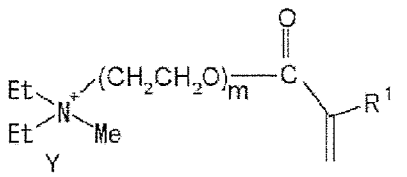

···(6)

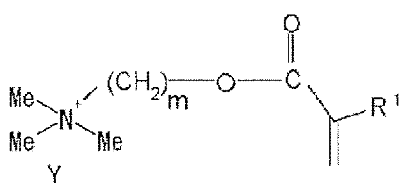

···(3)

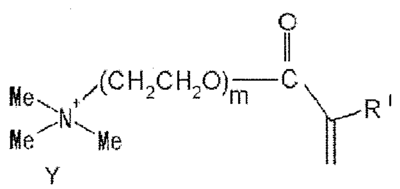

···(7)

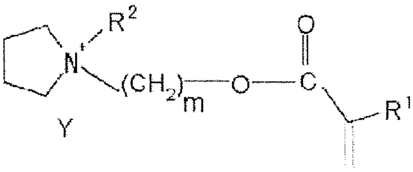
···(4)

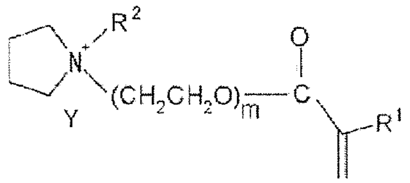
···(8)

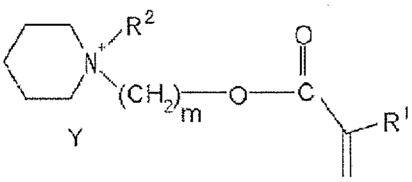
···(5)

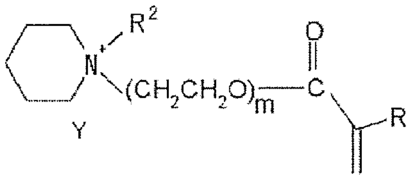
···(9)

wherein m, $R^1$, $R^2$, and Y have the same meanings as in the general formula (1).

Me represents a methyl group, and Et represents an ethyl group.

The SRT material (lubricant) can attain high lubricity, using a surface where the polymer chain is grafted at a high grafting density. For example, a non-hydrolyte polymer such as poly(methyl methacrylate) (PMMA) can also be used favorably.

(1-2) Grafting Method for Thickened CPB

Regarding the polymer chain-grafting method for forming a thickened CPB, a polymer chain may be grafted at a desired grafting density.

A graft-from method, or a graft-to method may be employed, and a graft-from method is preferred. Also usable is a method of bonding a hydrophobic moiety of a polymer chain of a hydrophobic-hydrophilic diblock copolymer (for example, PMMA-b-PSGMA), to the surface of a hydrophobic or hydrophobized substrate (see Nature, 425, 163-165 (2003)).

For the polymerization method for a polymer chain, a method of polymerization to form a polymer chain at a desired grafting density is preferred, and a radical polymerization method is preferred.

Regarding the radical polymerization, a living radical polymerization (LRP) method is more preferred, in which:

the molecular weight and the molecular weight distribution of the polymer chain to be grafted are easy to control, and various copolymers (e.g., random copolymers, block copolymers, composition-gradient copolymers) are easy to graft.

As the living radical polymerization method, an atom transfer radical polymerization (ATRP) method is more preferred (see J. Am. Chem. Soc., 117, 5614 (1995); Macromolecules, 28, 7901 (1995); Science, 272, 866 (1996); Macromolecules, 31, 5934-5936 (1998)).

A nitroxide mediated polymerization method (NMP), a reversible addition-fragmentation chain transfer (RAFT) polymerization method, a reversible chain transfer catalyzed polymerization method (RTCP), and a reversible complexation mediated polymerization method (RCMP) are also employable here.

For the polymer chain grafting method, above all, a graft-from method using living radical polymerization is preferred (see JP-11-263 819A).

The catalyst for radical polymerization may be any one capable of controlling radical polymerization, and more preferably, a transition metal complex is used.

Preferred examples of the transition metal complex include metal complexes in which the center metal is a Group 7, Group 8, Group 9, Group 10 or Group 11 element. More preferred catalysts are copper complexes, ruthenium complexes, iron complexes and nickel complexes.

Above all, copper complexes are preferred. Examples of cuprous compounds include cuprous chloride, cuprous bromide, cuprous iodide, cuprous cyanide, cuprous oxide, and cuprous perchlorate.

As the ligand of metal complexes, for example, preferred are 2,2'-bipyridyl or derivatives thereof, 1,10-phenanthroline or derivatives thereof, polyamines (e.g., tetramethylethylenediamine, pentamethyldiethylenetriamine, hexamethyltris(2-aminoethyl)amine), and polycyclic alkaloids such as L-(-)-sparteine.

A divalent ruthenium chloride/tristriphenylphosphine complex ($RuCl_2(PPh_3)_3$) is also preferred as the catalyst. In the case where a ruthenium compound is used as a catalyst, preferably, an activator of aluminum alkoxides is added.

A divalent iron bistriphenylphosphine complex ($FeCl_2(PPh_3)_2$), a divalent nickel bistriphenylphosphine complex

($NiCl_2(PPh_3)_2$), and a divalent nickel bistributylphosphine complex ($NiBr_2(PBu_3)_2$) are also preferably used as a catalyst.

Preferably, a solvent is used for polymerization.

Preferred examples of the solvent include hydrocarbon solvents (e.g., benzene, toluene), ether solvents (e.g., diethyl ether, tetrahydrofuran, diphenyl ether, anisole, dimethoxybenzene), halogenohydrocarbon solvents (e.g., methylene chloride, chloroform, chlorobenzene), and ketone solvents (e.g., acetone, methyl ethyl ketone, methyl isobutyl ketone).

Preferred examples of the solvent include alcohol solvents (e.g., methanol, ethanol, propanol, isopropanol, butyl alcohol, t-butyl alcohol), nitrile solvents (e.g., acetonitrile, propionitrile, benzonitrile), ester solvents (e.g., ethyl acetate, butyl acetate), and carbonate solvents (e.g., ethylene carbonate, propylene carbonate).

Preferred examples of the solvent include amide solvents (e.g., N,N-dimethylformamide, N,N-dimethylacetamide), hydrochlorofluorocarbon solvents (e.g., HCFC-141b, HCFC-225) hydrofluorocarbon (HFCs) solvents (HFCs having a carbon number of 2 to 4, 5, 6 or more), and perfluorocarbon solvents (e.g., perfluoropentane, perfluorohexane).

Preferred examples of the solvent include alicyclic hydrofluorocarbon solvents (e.g., fluorocyclopentane, fluorocyclobutane), oxygen-containing fluorine solvents (e.g., fluoroether, fluoropolyether, fluoroketone, fluoroalcohol), and water.

One alone or two or more kinds of these may be used either singly or as combined. Polymerization may also be carried out in an emulsion system or in a system containing a supercritical fluid $CO_2$ as a medium.

When a graft-from method is used for the grafting method for polymer chains, a polymerization initiation group need to exist in the surface of a substrate.

The polymerization initiation group is one capable of initiating polymerization. As the group, preferred is a halogenoalkyl group or a halogenosulfonyl group.

Preferably, the polymerization initiation group is physically or chemically bonded to the surface of a substrate in point of the ability thereof to control the graft density and the primary structure (molecular weight, molecular weight distribution, monomer sequence) of grafted polymer chains.

For introducing (bonding) the polymerization initiation group to the surface of a substrate, a chemical adsorption method or a Langmuir-Blodgett's (LB) method may be employed.

For example, for immobilization of a chlorosulfonyl group (polymerization initiation group) onto the surface of a silicon wafer (substrate) through chemical bonding thereto, 2-(4-chlorosulfonylphenyl)ethyltrimethoxysilane and/or 2-(4-chlorosulfonylphenyl)ethyltrichlorosilane may be reacted with the oxidation layer of the silicon wafer surface.

In introducing a polymerization initiation group into the surface of a substrate for living radical polymerization thereon, preferably, a surface treatment agent having a polymerization initiation group and a substrate bonding/hydrophilic group is used. The treatment agent may be a low-molecular compound or a high-molecular compound. For example, a polymerization initiation group-containing silane coupling agent represented by the following formula is preferably used.

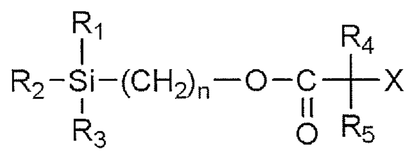

wherein the spacer chain length n is preferably an integer of 1 to 10, more preferably an integer of 3 to 8, and most preferably 6.

At least one of $R_1$, $R_2$ and $R_3$ is preferably an alkoxyl group or a halogen atom. For example, $R_1=R_2=R_3=OCH_2CH_3$, or $R_1=R_2=R_3=OCH_3$ is more preferred.

$R_4$ and $R_5$ each are preferably a C1 to C3 alkyl group or an aromatic functional group. For example, $R_4=R_5=CH_3$ is more preferred.

X is preferably a halogen atom, and is more preferably Br.

The polymerization initiation group-containing silane coupling agent may be produced, for example, according to the method described in WO2006/087839. Typical examples of the polymerization initiation group-containing silane coupling agent include (2-bromo-2-methyl)propionyloxyhexyltriethoxysilane (BHE), and (2-bromo-2-methyl)propionyloxypropyltriethoxysilane (BPE).

From the viewpoint of controlling the graft density, a silane coupling agent not containing a polymerization initiation group (for example, ordinary alkylsilane coupling agent) may be used in addition to the polymerization initiation group-containing silane coupling agent.

In the case where a polymerization initiation group-containing silane coupling agent is used as a compound to be a starting material for a bonding group moiety, the silane coupling agent may be hydrolyzed in the presence of water to be a silanol, which is then partially condensed to be in an oligomer state. In this state, this may be adsorbed to the silica surface in a mode of hydrogen bonding thereto, and then the inorganic-metallic material is dried to cause dehydrogenating condensation to thereby form a polymerization initiation group on that material.

The graft density can be changed in any desired manner by controlling the proportion of the polymerization initiation group-containing silane coupling agent and the silane coupling agent not containing a polymerization initiation group. In the case where all of the silane coupling agent is a polymerization initiation group-containing silane coupling agent, an occupancy of more than 10% can be attained after the subsequent polymerization.

For introducing the polymerization initiation group into the substrate surface, an LB method or a vapor phase adsorption method may also be employed from the viewpoint of controlling the uniformity of the polymerization initiation group to be introduced and the graft density of the polymerization initiation group.

In the LB method, first, a film formation material is dissolved in a suitable solvent (e.g., chloroform, benzene). Next, a small amount of the solution is spread on a clean liquid surface, preferably on a liquid surface of pure water, and then the solvent is evaporated away or is diffused into the adjacent aqueous phase to thereby form a low-density membrane of film-forming molecules on the water surface.

Subsequently, in general, the partition is mechanically swept on the water surface to reduce the surface area of the water surface on which the film-forming molecules have spread, thereby compressing the membrane to increase the density thereof, and thus forming a dense monomolecular membrane on the water surface.

Next, under appropriate conditions, while the surface density of the molecules constituting the monomolecular membrane on the water surface is kept constant, the substrate with the monomolecular layer deposited thereon is dipped in or is drawn up in the direction cutting across the monomolecular membrane on the water surface so as to transfer the monomolecular membrane on the water surface onto the substrate to deposit the monomolecular layer on the substrate.

Details and specific examples of the LB method are described in the following.

"Fukuda, K., et al.; New Experimental Chemistry Course, Vol. 18 (Interface and Colloid), Chap. 6 (1977), Maruzen"
"Fukuda, K., Sugi, M., Sasabe, H.; LB Membrane and Electronics (1986), CMC", or
"Ishii, T.; Practical Technique for Forming Good LB Membrane, (1989), Kyoritsu Publishing".

(1-3) Crosslinked Structure of Thickened CPB

Preferably, the polymer chains to form a thickened CPB have a crosslinked structure between CPBs. Preferably, the polymer chains have a reactive substituent (crosslinking group) for bonding to a substrate.

The crosslinking group includes an azide group, and a halogen group (preferably a bromine group). The crosslinking group may be in any of a main chain or a graft chain.

A reactive group of an unreacted graft chain that the main chain has may be used as the crosslinking group, and a reactive group that remains at the terminal of the graft chain in forming it through living radical polymerization may also be used as a crosslinking group.

Crosslinking may occur by adding a small amount of a bifunctional monomer during synthesis of CPB.

Crosslinked Structure of Thickened CPB

The crosslinked structure includes a physically-crosslinked structure and a chemically-crosslinked structure. The crosslinked structure of the thickened CPB controls the elastic modulus of the thickened CPB.

The method of introducing physical crosslinking and chemical crosslinking as a crosslinked structure is useful at any time during polymer brush formation (during polymerization, this may be referred to as in-situ crosslinking) or during post-polymerization (during post-crosslinking).

As an example, a case of in-situ "chemical crosslinking" during polymerization is described below.

For synthesis, an appropriate amount of a divinyl monomer (bifunctional, for example, ethylene glycol dimethacrylate) is added in addition to the monomer (monofunctional) during synthesis of thickened CPB.

Atomic transfer radical polymerization (ATRP) is carried out in a solution. By adding 1 mol% of a divinyl monomer relative to the monomer, the polymer brush layer does not dissolve in a good solvent even when cut off from the substrate surface. This confirms formation of effective crosslinking in the thickened CPB.

In measurement of the degree of swelling of the polymer brush layer according to an AFM colloid probe method in a good solvent (e.g., o-dichlorobenzene), the degree of swelling decreased with the increase in the concentration of the crosslinking agent added, which suggests formation of effective crosslinking.

(1-4) Graft Density of Thickened CPB

Regarding the graft density of the polymer chain to form the thickened CPB, a graft density enough to show high lubricity may be good. The graft density of the polymer chain to form the thickened CPB may be suitably controlled depending on the polymer and/or the kind of the solvent to be used.

In the case of a poly(methyl methacrylate) (PMMA), the graft density of the polymer chain in CPB is generally 0.1 chain/nm$^2$ or more, preferably 0.15 chain/nm$^2$ or more, more preferably 0.2 chain/nm$^2$ or more, even more preferably 0.3 chain/nm$^2$ or more, especially more preferably 0.4 chain/nm$^2$ or more, and most preferably 0.45 chain/nm$^2$ or more.

In the case of a poly(lauryl methacrylate) (PLMA), the graft density of the polymer chain in CPB is generally 0.44 chain/nm$^2$ or more, preferably 0.06 chain/nm$^2$ or more, more preferably 0.08 chain/nm$^2$ or more, even more preferably 0.12 chain/nm$^2$ or more, especially more preferably 0.16 chain/mn$^2$ or more, and most preferably 0.18 chain/nm$^2$ or more.

In the case of a poly(N,N-diethyl-N-(2-methacryloylethyl)-N-methylammonium bis(trifluoromethylsulfonyl)imide) (PDEMM-TFSI), the graft density of the polymer chain in CPB is generally 0.02 chain/nm$^2$ or more, preferably 0.03 chain/nm$^2$ or more, more preferably 0.04 chain/nm$^2$ or more, even more preferably 0.06 chain/nm$^2$ or more, especially more preferably 0.08 chain/nm$^2$ or more, and most preferably 0.09 chain/nm$^2$ or more.

The graft density of a polymer chain may be measured according to a known method.

The graft density of a polymer chain may be measured, for example, according to the method described in Macromolecules, 31, 5934-5936 (1998), Macromolecules, 33, 5608-5612 (2000), or Macromolecules, 38, 2137-2142 (2005).

Specifically, the graft density (chain/nm$^2$) may be determined from the graft amount (W) and the number-average molecular weight ($M_n$) of the graft chain, according to the following equation:

$$\text{Graft Density (chain/nm}^2) = \text{W (g/nm}^2)/M_n \times \text{(Avogadro constant)}$$

wherein W represents a graft amount and $M_n$ represents a number-average molecular weight.

The graft amount (W) may be measured as follows. In the case where the substrate is a plane substrate such as a silicon wafer, the film thickness in a dry state is measured through ellipsometry measurement, that is, the thickness of the grafted polymer chain layer in a dry state is measured, and using the density of the bulk film, the graft amount per unit area is calculated.

In the case where the substrate is silica particles or the like, the graft amount may be measured through infrared absorption spectrometry (IR), thermogravimetric loss measurement (TG) or elementary analysis.

Regarding the number-average molecular weight ($M_n$), $M_n$ of the free polymer formed in a solution during polymerization is nearly the same as $M_n$ of a graft chain, and therefore, $M_n$ of the free polymer formed in a solution during polymerization may be employed.

In the case where a substrate is silica, a graft chain may be cut out from the graft point using a hydrofluoric acid solution, and according to gel permeation chromatography (GPC), $M_n$ and $M_w/M_n$ may be determined. The inventors have confirmed that these values are nearly the same as those of the free polymer formed in a solution.

The data may be measured according to the method described in JP-11-263819A, or the method described in Nature, 425, 163 (2003).

Specifically, from the inclination of a graph drawn by plotting the thickness in a dry state of a grafted polymer chain layer and the number-average molecular weight of a polymer chain (for example, see JP-11-263819A), or from the inclination of a graph drawn by plotting the graft amount of a grafted polymer chain and the number-average molecular weight of a polymer chain, the graft density of the polymer chain may be determined.

(1-5) Area Occupancy of Thickened CPB

Preferably, the thickened CPB is formed to have a graft density in such a manner that the area occupancy relative to the area of the surface of a substrate (surface occupancy: occupancy per cross section of polymer) could be 10% or more, more preferably 15% or more, and even more preferably 20% or more.

The graft density may be calculated from the absolute value of the number-average molecular weight ($M_n$) of the graft chain, the grafted polymer amount, and the surface area of the substrate.

The surface occupancy in the thickened CPB layer may be calculated by determining the cross section from the recurring unit length of the polymer in a fully stretched state, and the bulk density of the polymer followed by multiplying the resultant cross section by the graft density.

The surface occupancy means a ratio of the graft point (first monomer) occupying the surface of a substrate. It is 100% in closest packing, and the polymer could no more be grafted.

(1-6) Molecular Weight and Molecular Weight Distribution Index of Thickened CPB

The number-average molecular weight ($M_n$) of the polymer chain to form the thickened CPB is preferably a molecular weight capable of exhibiting desired lubricity.

The number-average molecular weight ($M_n$) of the polymer chain to form the thickened CPB is preferably 500 to 10,000,000 or so, more preferably 100,000 to 10,000,000 or so.

The molecular weight distribution index (PDI = $M_w/M_n$) is preferably a molecular weight distribution index (PDI) capable of exhibiting desired lubricity. Preferably, the molecular weight distribution index (PDI) is approximately 1.5 or less, more preferably 1.01 to 1.5 or so.

(1-7) Degree of Thickening of Thickened CPB

Preferably, the polymer chain to form the thickened CPB is thickened to a length capable of exhibiting desired lubricity.

According to the invention the polymer chain to form the thickened CPB is thickened to a length of approximately 500 nm or more. Preferably, the polymer chain to form the thickened CPB is thickened to a length of approximately 700 nm or more (0.7 μm or more), more preferably approximately 800 nm or more, even more preferably approximately 1,000 nm or more (1 μm or more).

The mean molecular chain length of the polymer chain may be determined, for example, by measuring the number-average molecular weight ($M_n$) of the polymer chain and the molecular weight distribution ($M_w/M_n$) thereof, and may be obtained from these measurement data.

For measurement of the number-average molecular weight ($M_n$) of the polymer chain and the molecular weight distribution ($M_w/M_n$) thereof, a method may be employed where the polymer chain is cut out from the substrate through treatment with hydrofluoric acid, and the cut-out polymer chain is analyzed through size exclusion chromatography.

Alternatively, on the presumption that a free polymer to form during polymerization has the same molecular weight as that of the polymer chain introduced into the substrate, the number-average molecular weight ($M_n$) of the free polymer and the molecular weight distribution ($M_w/M_n$) thereof are measured according to size exclusion chromatography, and the resultant data may be employed here as they are.

Method for Measurement of Degree of Thickening and Molecular Weight Distribution Index of Thickened CPB

The thickened CPB can be synthesized through surface-initiated living radical polymerization under the condition of high pressure, an ionic liquid solvent or a combination thereof. In doing so, when a free initiator is added to the polymerization solution, a free polymer having a molecular weight and a molecular weight distribution on the same level as those of a polymer brush constituent chain can be obtained.

Using size exclusion chromatography, the free polymer may be analyzed to determine the number-average molecular weight and the molecular weight distribution index thereof.

When the polymerization is carried out without a free initiator, if desired, the polymer brush constituent chain may be cut out from the substrate surface, and the number-average molecular weight and the molecular weight distribution index thereof may be determined according to size exclusion chromatography.

In size exclusion chromatography analysis, a method of calibration using a standard sample of the same kind of an available monodispersion having a known molecular weight and a method of absolute molecular weight evaluation using a multi-angle light scattering detector are carried out.

For quantitative determination of the graft amount, ellipsometry measurement is mainly used. From the dry thickness of the surface graft layer, that is, the graft amount and the above-mentioned number-average molecular weight, the graft density can be calculated.

(1-8) Substrate for Use in Thickened CPB

The substrate to be used is preferably one that can be used for polymer chain grafting in the above-mentioned graft-from method or graft-to method. For example, the substrate may be appropriately selected from organic materials, inorganic materials and metal materials. A hydrophobic substrate and a hydrophilic substrate are favorably used.

Preferred examples of solids for use for the substrate include polyurethane materials, polyvinyl chloride materials, polystyrene materials, polyolefin materials, PMMA, PET, cellulose acetate, silica, inorganic glass, paper, plastic-laminated films, and ceramics (e.g., alumina ceramics, bioceramics, composite ceramics such as zirconia-alumina composite ceramics).

As solids for use for the substrate, preferred are metals (e.g., aluminum, zinc, copper, titanium), metal-deposited paper, silicon, silicon oxide, silicon nitride, polycrystalline silicon, and composite materials thereof.

Preferred examples of hydrophobic organic materials usable as the substrate include polyolefins (e.g., polyethylene, polypropylene, polyisobutylene, ethylene-α-olefin copolymers), silicone polymers, acrylic polymers (e.g., polyacrylonitrile, polymethyl methacrylate, polyethyl methacrylate, polyethyl acrylate), and copolymers thereof.

As hydrophobic organic materials for use as the substrate, preferred are fluoropolymers (e.g., polytetrafluoroethylene, chlorotrifluoroethylene, ethylene fluoride-propylene, polyvinyl fluoride), vinyl polymers (e.g., polyvinyl chloride, polyvinyl methyl ether, polystyrene, polyvinyl acetate, polyvinyl ketone), and copolymers thereof.

As hydrophobic organic materials for use as the substrate, preferred are vinyl monomer-containing copolymers (e.g., ABS), natural and synthetic rubbers (e.g., latex rubber, butadiene-styrene copolymer, polyisoprene, polybutadiene, butadiene-acrylonitrile copolymer, polychloroprene polymer, polyisobutylene rubber, ethylene-propylene-diene copolymer, polyisobutylene-isoprene), and copolymers thereof.

As hydrophobic organic materials for use as the substrate, preferred are polyurethanes (e.g., polyether urethane, polyester urethane, polycarbonate urethane, polysiloxane urethane), polyamides (e.g., nylon 6, nylon 66, nylon 10, nylon 11), polyesters, epoxy polymers, cellulose, modified celluloses, and copolymers thereof.

As hydrophilic organic materials for use as the substrate, preferred are hydrophilic acrylic polymers (e.g., polyacrylamide, poly-2-hydroxyethyl acrylate, poly-N,N-dimethylacrylamide, polyacrylic acid, polymethacrylic acid), and copolymers thereof.

As hydrophilic organic materials for use as the substrate, preferred are hydrophilic vinyl polymers (e.g., poly-N-vinylpyrrolidone, polyvinylpyridine), polymaleic acid, poly-2-hydroxyethyl fumarate, maleic anhydride, polyvinyl alcohol, and copolymers thereof.

The substrate is, for example, preferably tubes, sheets, fibers, strips, films, plates, foils, membranes, pellets, powders, and molded articles (e.g., extrusion-molded articles, cast-molded articles).

The substrate may be in any form or shape.

Preferred examples of the material for the substrate include polyurethane, polyvinyl chloride, polystyrene, polycarbonate, PMMA, PET, cellulose acetate, silica, inorganic glass, aluminum, copper, silicon, and silicon oxide.

In the case where the SRT material (lubricant) of the present invention is used for seals, the substrate thereof is preferably rubber (for oil seal) or inorganic oxides (for mechanical seal) among the above-mentioned substrates.

In the case where the SRT material (lubricant) of the present invention is used for bearings, the substrate thereof is preferably metals (e.g., SUS, SUJ2, carbon steel) or resins (e.g., polyethylene) among the above-mentioned substrates.

In the case where the SRT material (lubricant) of the present invention is used for guides (guiding mechanisms), the substrate thereof is preferably metals (e.g., SUS, SUJ2, carbon steel) or resins (e.g., polyphenylene sulfide, polytetrafluoroethylene) among the above-mentioned substrates.

In the case where the SRT material (lubricant) of the present invention is used for slide members, the substrate thereof is preferably irons or iron alloys such as cast iron, steel, stainless steel; non-iron metals and non-iron alloys such as aluminium, copper; or non-metal substances such as silicon wafer, glass, quartz.

(1-9) Production of SRT material (lubricant) having surface grafted with thickened CPB

The SRT material (lubricant) of the present invention may be produced, for example, by grafting the surface of a sheet-like substrate with a polymer chain. The resultant sheet-like SRT material (lubricant) may be immobilized to the site that needs to be lubricated (e.g., slide part) of an article that needs to be lubricated (e.g., micromachine, artificial joint), according to a known method of bonding or welding thereto.

The SRT material (lubricant) may also be produced on the surface of a member, as a substrate, of a site that needs to be lubricated of an article that needs to be lubricated in such a manner that the surface thereof is grafted with a polymer chain. Forming the SRT material (lubricant) on the surface that needs to be lubricated in the manner as above is preferred, since the method does not require a step of immobilizing the SRT material (lubricant).

The surface grafted with a polymer chain for use for the SRT material (lubricant) may be produced, for example, according to the method described in JP-11-263819A.

(1-10) Frictional Coefficient ($\mu$) of SRT Material (lubricant)

Preferably, the frictional coefficient ($\mu$) of the SRT material (lubricant) is approximately 0.1 or less.

Preferably, the frictional coefficient ($\mu$) of the SRT material is 0.01 or less.

The frictional coefficient ($\mu$) of the SRT material (lubricant) may be measured using an atomic force microscope (AFM).

An SRT material (lubricant) is formed on the surface of a substrate such as silicon wafer and on the surface of a probe of a silica particle (radius R), and the probe is attached to a cantilever, and measured while the polymer chain is kept swollen in a good solvent. From the shear coefficient (G) of the cantilever, the width (W) of the cantilever, the thickness (T) of the cantilever and the length (L) of the cantilever, the torsional spring constant ($k_L$) of the cantilever is calculated according to the following equation (see Adv Colloid Interface Sci, 27, 189 (1987)).

$$k_L = GWT^3/3L$$

The force in the normal direction ($F_N$, normal force) is calculated according to the following equation.

$$F_N = k_N \Delta_z$$

wherein $\Delta_z$ represents a normal displacement of the cantilever.

The angular (torsional) displacement ($\theta_L$) of the cantilever may be measured by sliding the probe (silica particle) back and forth in the y direction on the sample substrate (silicon wafer) at a constant speed while a constant load is kept applied to the probe in the normal direction thereto.

The force in the lateral direction ($F_L$, lateral force), that is, the frictional force may be calculated using these data according to the following equation.

$$F_L = k_L \theta_L / R$$

From the relation between the resultant normal force ($F_N$) and the lateral force ($F_L$), the frictional coefficient ($\mu$) may be calculated.

Preferably, the frictional coefficient ($\mu$) of the SRT material (lubricant) is approximately 0.1 or less, more preferably approximately 0.01 or less, even more preferably approximately $10^{-3}$ or less.

Method for Measurement of Frictional Coefficient ($\mu$) of SRT Material

In a ball-on-disc test, for example, a tribometer UMT TriboLab by Bruker is used. As an example, a thickened CPB is given to one or both of a glass ball having a radius of curvature of 7.79 mm and a glass substrate. This is tested in a good solvent under a load ($F_n$) of 0.1 to 40 N and at a rotation speed of 10 to 2000 rpm to measure the frictional force ($F_S$) thereof.

The frictional coefficient ($\mu$) is defined as a ratio of $F_s$ to $F_n$ ($F_s/F_n$).

Method for Measurement of Durability of SRT Material

Thickened CPBs (e.g., thickened PMMA brushes ($M_n$ = 2,270,000, PDI ($M_w/M_n$) = 1.45, $L_d$ = 820 nm, $\sigma$ = 0.25 chain/nm$^2$)) are slid to each other in DEME-TFSI under a load of 1 to 10 N for a distance of about 1200 m.

When the SRT material of the present invention is used, the mother glass substrate is not worn.

In the ball-on-disc test, the ball side (always slide surface) is also checked.

The durability may be evaluated with reference to the micrograph of the ball surface after peeling of the thickened CPB.

(1-11) Indentation and Compressive Elasticity Modulus of SRT Material (lubricant)

Preferably, the SRT material (lubricant) has an indentation of approximately 100 nm or more and a compressive elasticity modulus of approximately 1 MPa or more.

As the concept of the invention thereof, the SRT material of the present invention does not need to always contain a thickened CPB so far as it satisfies the above-mentioned compressive elasticity modulus and frictional coefficient ($\mu$).

The indentation of the SRT material (lubricant) may be measured using an AFM or a nanoindenter.

Preferably, the indentation of the SRT material (lubricant) is approximately 100 nm or more, more preferably approximately 120 nm or more, and even more preferably approximately 150 nm or more.

The compressive elasticity modulus of the SRT material (lubricant) may be measured using an AFM or a nanoindenter.

Preferably, the compressive elastic modulus of the SRT material (lubricant) is approximately 0.1 MPa or more, more preferably approximately 1 MPa or more, and even more preferably approximately 10 MPa or more.

In the case where the SRT material (lubricant) is for bearings, the surface pressure thereof is generally high (Fig. 6).

In the case where the SRT material (lubricant) is for bearings, the compressive elasticity modulus thereof is preferably approximately 0.1 MPa or more, more preferably approximately 1 MPa or more, and even more preferably

approximately 10 MPa or more.

In the case where the SRT material (lubricant) is for seals, the compressive elasticity modulus thereof is preferably approximately 0.1 MPa or more, more preferably approximately 1 MPa or more, and even more preferably approximately 10 MPa or more.

Method for Measurement of Indentation and Compressive Elasticity Modulus of SRT Material

The indentation and the compressive elasticity modulus of the SRT material may be measured according to a nanoindentation method or an atomic force microscope (AFM) colloid probe method.

In the nanoindentation method, for example, Nanomechanics iMicro (sensor: inForce 50) is used.

As an example, a thickened CPB (e.g., thickened PMMA brush ($M_n$ = 2,010,000, PDI ($M_w/M_n$) = 1.26, $L_d$ = 913 nm, $\sigma$ = 0.33 chain/nm$^2$, and $\sigma^*$ = 0.18)) formed on a BK7 substrate is analyzed for indentation measurement with a Berkovich indenter in a solvent of DEME-TFSI.

As an example, a thickened PMMA brush formed on a BK7 substrate may be analyzed for compressive elasticity modulus measurement under the conditions of a measurement mode: constant strain speed, a strain speed: 0.2%/sec, a vibration frequency: 100 Hz, a vibration amplitude: 2 nm, and a surface detection threshold level: 50 N/m.

In the AFM colloid probe method, for example, a silica probe particle having a diameter of 10 $\mu$m is immobilized to the tip of an AFM cantilever, and the thickened CPB (e.g., thickened PMMA brush) formed on a silicon substrate is analyzed for force curve measurement, using an AFM available from JPK Instruments, or an AFM available from Seiko Instruments.

To measure the distance from the substrate surface, a part of the polymer brush layer on the silicon substrate is scratched, and the area around the boundary of the scratched part is observed (AFM imaging) to evaluate the height difference profile for force curve offset correction.

As an example, a thickened CPB (e.g., thickened PMMA brush ($M_n$ = 2,760,000, PDI ($M_w/M_n$) = 1.15, $L_d$ = 1245 nm, $\sigma$ = 0.32 chain/nm$^2$, and $\sigma^*$ = 0.18)) is analyzed in a solvent of o-dichlorobenzene, using cantilevers each having a different spring constant (0.57 N/m, 3.3 N/m, 51 N/m), and the results are combined to draw a force curve in a broad load range.

The SRT material of the present invention can secure an indentation of 100 nm or more, and on the force curve as above, the compressive elasticity modulus thereof may be estimated.

Regarding the compressive elasticity modulus, a force-distance curve is drawn from the force curve, and on the presumption of Hertz contact, the Young's modulus may be calculated to provide the compressive elasticity modulus.

(1-12) Article Containing SRT Material (lubricant)

The disclosure also relates to an article that contains an SRT material (lubricant) having a surface grafted with a polymer chain to form a thickened CPB.

The SRT material of the present invention is for slide mechanisms.

Preferably, the article that contains the SRT material (lubricant) is for bearings, seals or guides (guiding mechanisms).

Regarding the article that contains the SRT material (lubricant), preferably, the lubricant of the present invention is applied to both the slide faces of the site that needs to be lubricated (e.g., slide part).

The article that contains the SRT material (lubricant) may be produced, for example, by immobilizing the SRT material (lubricant) of the present invention in the form of a sheet to the site to be lubricated (e.g., slide part) of an article to be lubricated according to a known bonding or welding method.

The article may also be produced by grafting the surface of a member to be lubricated of an article to be lubricated, as a substrate, with a polymer chain to thereby form the SRT material (lubricant) of the present invention in the site to be lubricated.

Forming the SRT material (lubricant) on the surface that needs to be lubricated of an article to be lubricated in the manner as above is preferred, since the method does not require a step of immobilizing the lubricant.

(1-13) Lubricating Liquid Contained in SRT Material (lubricant)

The SRT material (lubricant) having a surface grafted with a polymer chain to form a thickened CPB exhibits good lubricity when the grafted polymer chain therein is swollen with a lubricating liquid (solvent, liquid substance).

The SRT material (lubricant) is grafted with a polymer chain at a high graft density, and therefore when the polymer chain therein is swollen with a lubricating liquid, the material is stretched, and is preferably stretched to a high degree comparable to a fully stretched chain.

It is considered that, when the polymer chain therein is swollen with a lubricating liquid, the SRT material

(lubricant) could bear a large load owing to the large osmotic pressure effect of the thickened solution system of the swollen polymer chain layer. In addition, it is also considered that, owing to cancelation of local concentration increase and owing to large entropy gain (to be attained by the high stretch state) in the contact region, the grafted polymer chains do not undergo mutual penetration, and as a result, the SRT material can express low-friction characteristics.

The SRT material (lubricant) can express low-friction characteristics since the polymer chain therein is stretched in a solvent, and therefore it is desirable that the SRT material is used in a lubricating liquid capable of swelling or stretching the polymer chain therein.

As the lubricating liquid capable of swelling or stretching polymer chains, a good solvent is preferred.

The good solvent varies depending on the grafted polymer chain, and therefore may be appropriately selected in accordance with the polymer chain.

In the case where a polymer chain of PMMA is grafted, the good solvent is preferably an aprotic solvent such as toluene, or a hydrophobic ionic liquid.

In the case where a polymer chain of PHEMA is grafted, the good solvent is preferably a polar solvent such as methanol.

In the case where a hydrophilic polymer chain is grafted, the good solvent is preferably an aqueous solvent containing water.

The SRT material (lubricant) is a layer to be formed by swelling the polymer chain formed on a substrate with a lubricating liquid (liquid substance). The liquid substance to swell the polymer chain is preferably a compound capable of exhibiting lubricity for polymer graft chains.

From the viewpoint of non-volatility, flame retardancy, heat resistance and electrochemical stability, an ionic liquid is preferred in the case where the affinity thereof to the polymer chain is high (especially in the case where the polymer chain has an ionic dissociating group).

The ionic liquid may also be called an ambient temperature molten salt, and this is a low-melting-point salt having ionic conductivity. Most of such salts are obtained by combining a cation of an organic onium ion and an organic or inorganic anion, and are characterized by having a relatively low melting point.

The melting point of the ionic liquid is generally 100°C or lower, preferably room temperature (25°C) or lower.

The ionic liquid for use herein may be represented by the following general formula (10), and has a melting point of 50°C or lower, preferably 25°C or lower.

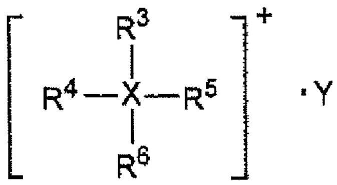 ···(10)

wherein $R^3$, $R^4$, $R^5$, and $R^6$ may be the same as or different from each other, each representing an alkyl group having 1 to 5 carbon atoms, or an alkoxyalkyl group represented by $R'-O-(CH_2)_n-$ (where R' represents a methyl group or an ethyl group, and n represents an integer of 1 to 4), and any two of these $R^3$, $R^4$, $R^5$, and $R^6$ may form a ring.

However, at least one of $R^3$, $R^4$, $R^5$, and $R^6$ is the above-mentioned alkoxyalkyl group.

X represents a nitrogen atom or a phosphorus atom, and Y represents a monovalent anion.

The alkyl group having 1 to 5 carbon atoms includes a methyl group, an ethyl group, an n-propyl group, a 2-propyl group, an n-butyl group, and an n-pentyl group.

The alkoxyalkyl group represented by $R'-O-(CH_2)_n-$ is preferably a methoxymethyl group, an ethoxymethyl group, a 2-methoxyethyl group, a 2-ethoxyethyl group, a 3-methoxypropyl group, a 3-methoxypropyl group, a 4-methoxybutyl group or a 4-ethoxybutyl group.

The compounds where any two of $R^3$, $R^4$, $R^5$, and $R^6$ form a ring and where X represents a nitrogen atom for use herein are preferably quaternary ammonium salts having an aziridine ring, an azetidine ring, a pyrrolidine ring or a piperidine ring.

The compounds where any two of $R^3$, $R^4$, $R^5$, and $R^6$ form a ring and where X represents a phosphorus atom are preferably quaternary phosphonium salts having a pentamethylene phosphine (phosphorinane) ring.

Quaternary ammonium salts having, as a substituent, at least one 2-methoxyethyl group where R' is a methyl group and n is 2 are preferred.

Also preferred are quaternary salts having, as substituents, a methyl group, two ethyl groups and an alkoxyethyl group and represented by the following general formula (II).

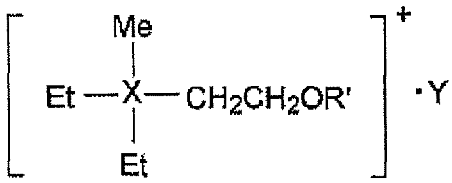 ···(11)

wherein R' represents a methyl group or an ethyl group, X represents a nitrogen atom or a phosphorus atom, and Y represents a monovalent anion.

Me represents a methyl group, and Et represents an ethyl group.

The monovalent anion Y in the general formulae (10) and (11) is not specifically limited.

As the monovalent anion Y, preferred is use of $BF_4^-$, $PF_6^-$, $AsF_6$-, $SbF_6$-, $AlCl_4$-, $NbF_6$-, $HSO_4$-, $ClO_4$-, $CH_3SO_3$-, $CF_3SO_3^-$, $CF_3CO_2^-$, $(CF_3SO_2)_2N^-$, C1-, Br-, or I-.

As the monovalent anion Y, especially preferred is $BF_4^-$, $PF_6^-$, $(CF_3SO_2)_2N^-$, $CF_3SO_3^-$, or $CF_3CO_2^-$, from the viewpoint of the dissociation degree, the stability and the mobility thereof in a non-aqueous organic solvent.

Among the quaternary salts represented by the general formulae (10) and (11), specific examples of quaternary ammonium salts and quaternary phosphonium salts preferred for use herein include the following compounds (12) to (20) (wherein Me represents a methyl group, and Et represents an ethyl group).

As the quaternary ammoniums salts and the quaternary phosphonium salts, in particular, use of the quaternary ammonium salt represented by the following formula (12) or (17) is more preferred in consideration of providing electricity storage devices excellent in low-temperature characteristics.

As the quaternary ammoniums salts and the quaternary phosphonium salts, use of the quaternary ammonium salt represented by the following formula (17) is especially preferred from the viewpoint that the salt has a low viscosity and therefore can reduce the kinematic frictional coefficient during sliding.

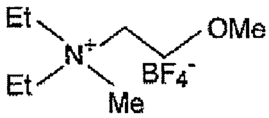 ···(12)

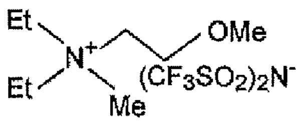 ···(17)

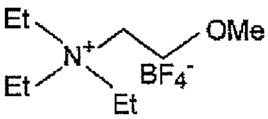 ···(13)

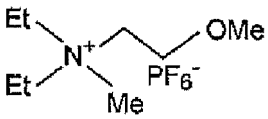 ···(18)

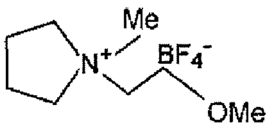 ···(14)

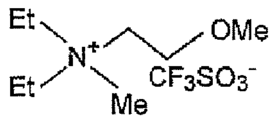 ···(19)

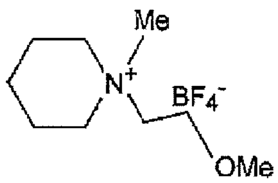 ···(15)

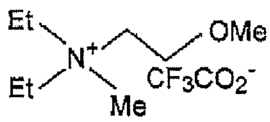 ···(20)

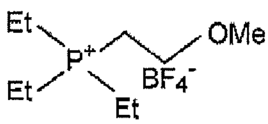 ···(16)

Any other ionic liquid than the compounds represented by the general formula (10) is also employable here.

The SRT material (lubricant) is a layer formed by exposing the polymer chain formed on a substrate to a

lubricating liquid (liquid substance) to swell it. The liquid substance to swell the polymer chain is preferably a compound capable of swelling polymer graft chains, and is especially preferably an ionic liquid.

For example, preferred is an ionic liquid containing an imidazolium ion represented by the following general formula (21).

The counter anion to form an ionic liquid that contains an imidazolium ion or an ionic liquid that contains any other aromatic cation includes monovalent anions that are the same as those in the general formulae (10) and (11).

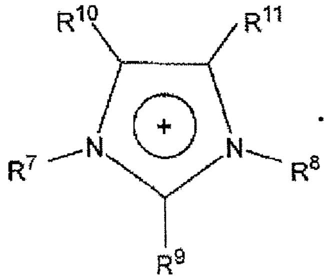

···(21)

wherein $R^7$ represents an alkyl group having 1 to 4 carbon atoms, or a hydrogen atom, and is especially preferably a methyl group having one carbon atom.

$R^8$ represents an alkyl group having 10 or less carbon atoms (optionally containing an ether bond), and a preferred example thereof is an ethyl group.

$R^9$, $R^{10}$, and $R^{11}$ each independently represent an alkyl group having 1 to 20 carbon atoms and optionally containing an oxygen atom.

$R^9$, $R^{10}$, and $R^{11}$ each may be a hydrogen atom.

Also preferred is an ionic liquid containing any other aromatic cation represented by the following formulae (22) to (27).

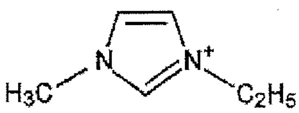

···(22)

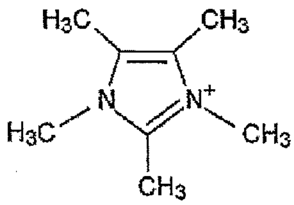

···(25)

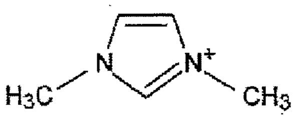

···(23)

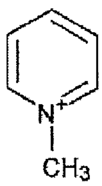

···(26)

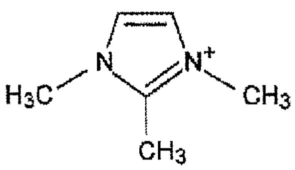

···(24)

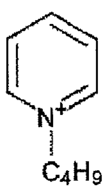

···(27)

In the present invention, the method of swelling the polymer chain formed on a substrate with a liquid substance is not specifically limited. For example, preferred is a method of applying a liquid substance to the polymer chain formed on a substrate followed by keeping it as such, or a method of immersing the polymer chain formed on a substrate in a liquid substance.

As grafted with a polymer chain at a high graft density, the SRT material (lubricant) can express low-friction characteristics.

The SRT material (lubricant) expresses low-friction characteristics in a good solvent, and therefore the SRT material (lubricant) of the present invention may be immobilized to or formed on both slide surfaces to be lubricated and

the polymer chain grafted on the SRT material (lubricant) may be swollen or stretched in a good solvent to lubricate the slide surfaces.

(2) SRT Material

The SRT material has a compressive elasticity modulus of 1 MPa or more and a frictional factor (μ) of 0.1 or less.
Preferably, the SRT material contains at least one component selected from the group consisting of thickened CPBs and components capable of expressing a CPB effect.

(2-1) Compressive Elasticity Modulus and Frictional Coefficient (μ) of SRT Material

The SRT material has a compressive elasticity modulus of approximately 1 MPa or more. More preferably, the compressive elasticity modulus of the material is approximately 10 MPa or more.
The SRT material has a frictional coefficient (μ) of 0.1 or less, preferably approximately 0.01 or less.
As the concept of the invention thereof, the SRT material of the present invention does not need to always contain a thickened CPB so far as it satisfies the above-mentioned compressive elasticity modulus and frictional coefficient (μ).
For the compressive elasticity modulus and the frictional coefficient (μ) of the SRT material, those of the SRT material (lubricant) containing the thickened CPB mentioned above may be referred to.

(2-2) Component of SRT Material

Preferably, the SRT material contains at least one component selected from thickened CPBs and components capable of expressing a CPB effect.
For the thickened CPBs, those contained in the SRT material (lubricant) mentioned above may be referred to.
As the components capable of expressing a CPB effect, preferred are bottle brushes, CPBs-carrying composite fine particles, and CPBs-carrying fibers.
A bottle brush is described. Among comb-like polymers of molecules that extend graft side chains (branches) from one main chain (stem), in particular, high-density comb-like polymers may have a cylindrical configuration where the main chain has extended owing to the excluded volume effect of the side chains, and are therefore called bottle brushes (since the shape thereof is similar to a brush used for washing bottles or flasks).
Synthesis of such bottle brushes falls roughly into three methods of a grafting-to method of introducing side chains into a stem polymer, a grafting-from method of polymerizing a monomer from a macro-initiator (a stem polymer having a polymerization active point), and a grafting-through method of polymerizing a macromonomer (a polymer having a polymerizing functional group at one terminal thereof). For such synthesis, living anionic polymerization, ring-opening metathesis polymerization (ROMP) or highly-popular living radical polymerization (LRP) are useful (Fig. 12).
An example of producing a bottle brush is described below, in which the polymer chain to form a thickened CPB has such a configuration that a graft chain of a side chain has extended from a polymer of the main chain moiety thereof.
In the case where the graft polymer is regarded as a column where the main chain is a central axis thereof (Fig. 12), the density of the graft chain in the surface of the side part of the graft polymer decreases with the increase in the graft efficiency and in the length of the graft chain so that the structural freedom degree of the graft chain is thereby increased.
The surface of the side part of the graft polymer is, in the case where the graft polymer is regarded as a column where the main chain is a central axis thereof and the circle drawn by connecting the graft chain tips while each graft chain is expanded linearly is the outer periphery thereof, the side surface of the column.
The circle is a circle drawn by a broken line as in Fig. 13.
When the freedom degree on the surface of the side part is high, the graft chain can be freely folded.
In the upper drawing of Fig. 12, the graft chains are short, and therefore the density of the graft chains is high also in the surface of the side part of the graft polymer. In the lower drawing of Fig. 12, the graft chains are long, and the density of the graft chains is extremely in the surface of the side part of the graft polymer.
The surface occupancy ($\sigma^*$) of the bottle brush is represented by the following equation (1).
The graft chain has a certain volume, and each graft chain can be regarded as a column (Fig. 13).
The graft density represents the number of graft chains in a unit area in the surface of a graft polymer side part, and the surface occupancy is a value that indicates the proportion of the graft chain tips relative to the surface of the graft polymer side part in a state where each graft chain runs out linearly in the normal direction from the main chain.
The surface occupancy is a value of 0 to 1, and with the increase in the value, the proportion of the tips of the graft chains to the surface of the side part thereof increases. Accordingly, the surface occupancy is considered to be a

numerical value that reflects the freedom degree of the graft chains.

It is considered that, when the surface occupancy is high, the structural freedom degree of the graft chains is limited and the graft chains can keep a state running out in nearly the normal direction relative to the main chain.

When the graft chains run out nearly in the normal direction relative to the main chain, it is presumed that the side of the outer surface of the graft polymer may readily have a structure where the graft chains stand vertically to the main chain, and the graft polymer may therefore exhibit the properties intrinsic to the structure.

The surface occupancy ($\sigma^*$) means an effective graft density [chain/nm$^2$] to be calculated according to the following equation (1):

$$\sigma^* = [(\text{volume per one recurring unit in graft chain moiety } [\text{nm}^3])/(\text{length of recurring unit in graft chain moiety } [\text{nm}])] \times \sigma \ [\text{chain/nm}^2] \ \ldots (1)$$

In the equation (1), $\sigma$ is calculated according to the following equation (2):

$$\sigma = 1/[(2\pi \times \alpha \times \text{polymerization degree of graft chain moiety})(\alpha/\text{grafting efficiency})] \ \ldots (2)$$

wherein $\alpha$ represents a length of the recurring unit of the graft chain moiety.

The volume ($v_0$ [nm$^3$]) of one monomer in the graft chain moiety is a numerical value to be derived from the following equation (3):

$$v_0 = [(\text{molecular weight of monomer in graft chain moiety})/(\text{Avogadro constant})]/(\text{bulk density of monomer in graft chain moiety}) \ \ldots (3)$$

In the equation (1), where the graft chain moiety is formed of a vinyl monomer, the length of the recurring unit of the graft chain moiety is 0.25 nm.

Therefore, more specifically, $\sigma^*$ is a numerical value to be derived from the following equation (1'):

$$\sigma^* = [(\text{volume per one recurring unit in graft chain moiety } [\text{nm}^3])/(0.25 \ [\text{nm}])] \times \sigma \ [\text{chain/nm}^2] \ \ldots (1')$$

In the equation (1'), $\sigma$ is calculated according to the following equation (2'):

$$\sigma = 1/[(2\pi \times 0.25 \times \text{polymerization degree of graft chain moiety})(0.25/\text{grafting efficiency})] \ \ldots (2')$$

For expressing the CPB effect, preferably, the surface occupancy is 0.1 or more.

The upper limit of the surface occupancy is not specifically limited. In general, the surface occupancy is 1.0 or less.

For example, the surface occupancy is preferably approximately 0.1 to 0.6, more preferably approximately 0.1 to 0.3.

The surface occupancy is, for example, preferably approximately 0.3 to 0.6.

The surface occupancy is, for example, preferably approximately 0.6 to 1.0.

Preferably, the CPBs-carrying composite fine particles are formed in such a manner that CPBs bond to the surfaces of fine particles.

In the CPBs-carrying composite fine particles, the polymer graft chains (CPBs) formed of a starting material of a monomer having a polymerizable functional group bond to the surfaces of the fine particles each via a bonding group, at an ultrahigh density (brush-like configuration).

The surface occupancy of the graft chains on the surfaces of the fine particles is preferably a high density of a few % or more, more preferably 5 to 50%, even more preferably 10 to 40%. Having a graft density that falls within the range, the graft chains may have an anisotropic configuration (high-elongation configuration).

The fine particles of the CPBs-carrying particles are preferably an inorganic substance or an organic substance.

For example, preferred are inorganic substances, such as silicon oxides such as silica;

noble metals such as Au, Ag, Pt and Pt;
transition metals such as Ti, Zr, Ta, Sn, Zn, Cu, V, Sb, In, Hf, Y, Ce, Sc, La, Eu, Ni, Co and Fe, and oxides or nitrides thereof; or
organic substances such as polymers.

Fine particles are to be a part of a core in composite fine particles having a CPB layer. The mean particle size of the fine particles to be a part of a core is, for securing graft polymerization at an ultrahigh density from the surfaces of the fine particles, preferably 5 nm to 30 μm, more preferably 10 nm to 10 μm, even more preferably 10 nm to 1 μm.

The mean particle size of the composite fine particles is preferably 10 nm to 30 μm, more preferably 10 nm to 20 μm, even more preferably 15 nm to 10 μm, and especially preferably 20 nm to 3 μm.

The composite fine particles are preferably "composite fine particles having a narrow particle size distribution" in which the particle size fluctuation is 20% or less.

The CPBs-carrying fibers indicate fibers having CPBs attached to the surfaces thereof, or composites of fibers, and bottle brushes or CPBs-carrying composite fine particles.

The fibers include commercially-available fibers of cotton, regenerated cellulose, PET or PVA, nanofibers formed by electrospinning, as well as naturally-available cellulose nanofibers and bacterial cellulose.

(3) Industrial Applicability of Lubricant and SRT Material

A polymer brush has attracted attention as a method useful for characteristic control of every surface.

Through recent development of surface-initiated living radical polymerization (SI-LRP), it has become possible to synthesize a precision polymer at a high graft density on every solid surface.

The graft density is larger by more than one digit than the density of a typical semi-dilute polymer brush (SDPB), and reaches a stage of CPB.

[1] Tsujii, Y., Ohno, K., Yamamoto, S., Goto, A. and Fukuda, T., "Structure and Properties of High- Density Polymer Brushes Prepared by Surface- Initiated Living Radical Polymerization", Adv. Polym. Sci., 197, 2006, 1-45.
Heretofore, a CPB swollen in a suitable solvent shows excellent lubricity and compression-independent ultralow frictional force, and gives a low frictional coefficient (μ) of $10^{-4}$.
[2] Tsujii, Y., Nomura, A., Okayasu, K., Gao, W., Ohno, K. and Fukuda, T., "AFM studies on microtribology of concentrated polymer brushes in solvents", J. Phys. Conf. Ser., 184, 2009, 012031.

However, the thickness of CPBs synthesized in conventional LRP is limited to be approximately less than 100 nm owing to radical stopping reaction, and when sometimes hard particles having a micrometer size are mixed in such CPBs, they may cause abrasive wear in a lubricant.

In Examples to be given below, a concentrated polymer brush (CPB) of a poly(methyl methacrylate) (PMMA) was synthesized under a high pressure of at most 500 MPa and/or in an ionic liquid solvent through atom transfer radical polymerization (ATRP). This is a thickened CPB.

The inventors have succeeded in increasing the thickness of the thickened CPB of PMMA thus synthesized under high pressure up to a micrometer level. This is a level that could not be realized in conventional ATRP. Using an atomic force microscope or a tribometer, the lubrication mechanism in a CPB-thickened film of PMMA was investigated with both a microscale and a macroscale.

The frictional coefficient data of the CPB-thickened film of PMMA measured with both these scales indicated boundary and hydrodynamic lubrication and ultralow frictional properties.

## Examples

The present invention is described in more detail with reference to Examples and Comparative Examples given below.

The present invention is not limited to these.

<Examples>

This time, the inventors synthesized CPBs of poly(methyl methacrylate) (PMMA) through atom transfer radical polymerization (ATRP, one of LRPs) under high pressure, and succeeded in dramatically thickening CPBs up to a micrometer level (thickened CPBs)

For observing microscale and macroscale lubrication mechanisms, synthesized PMMA brushes (thickened PMMA-CPBs) were tested to measure the frictional force acting as a shear velocity and the frictional coefficient ($\mu$) thereof between them, using an atomic force microscope and a tribometer.

Experiment Description

(1) Synthesis of PMMA Brushes (thickened CPBs)

An ATRP reaction liquid of methyl methacrylate (MMA) was produced according to the method described in the following literature. On silicon wafers and glass discs, the monomer was polymerized in a mode of surface-initiated living radical polymerization (SI-ATRP) at 60°C and under 500 MPa.

[3] Arita, T., Kayama, Y., Ohno, K., Tsujii, Y. and Fukuda, T., "High-pressure atom transfer radical polymerization of methyl methacrylate for well- defined ultrahigh molecular-weight polymers", Polymer, 49, 2008, 2426-2429.

After polymerization, the samples were taken out and analyzed to measure the molecular weight and the dry thickness (graft amount) of the CPB layer according to gel permeation chromatography and ellipsometry.

Specifically, in a Teflon pressure-tight case, methyl methacrylate (MMA), ethyl 2-bromo-2-methylpropionate (EBIB), copper(I) bromide (Cu(I)Br), copper(II) bromide (Cu(II) bromide) and 4,4'-dinonyl-2,2'-bipyridyl (dNvipy) were mixed and subjected to SI-ATRP at 60°C and under 500 MPa, in the presence of a silicon wafer or a glass disc with (2-bromoisobutyloxy)hexyltriethoxysilane (BHE) immobilized on the surface thereof, using a high-pressure reactor (HPS-700, Syn Corporation) (Fig. 14).

After a predetermined period of time, the substrates were taken out of the reaction solution, and ultrasonically washed with tetrahydrofuran (THF) and dried to give glass discs with polymer graft chains introduced into the surfaces thereof.

(2) Friction Measurement

Microscale friction characteristics of PMMA CPBs synthesized on silicon substrates and silica particles (radius: 5 $\mu$m) were measured according to an atomic force microscope (AFM) colloid probe method. Microscale friction characteristics of the same samples grafted on glass discs and lenses (diameter: 10 mm, radius of curvature: 7.79 mm) were also measured using a tribometer.

(3) Compressive Elasticity Modulus Measurement

The compressive elasticity modulus was measured according to a nanoindentation method or an AFM colloid probe method.

Thickened PMMA brushes ($M_n$ = 2,010,000, PDI ($M_w/M_n$) = 1.26, $L_d$ = 913 nm, $\sigma$ = 0.33 chain/nm$^2$, and $\sigma^*$ = 0.18) formed on a glass disc were analyzed for indentation measurement with a Berkovich indenter in a solvent of DEME-TFSI, using Nanomechanics iMicro (sensor: inForce 50).

Detailed of the measurement conditions are mentioned below.

Measurement Mode: constant strain rate
Strain rate: 0.2%/sec
Vibration frequency: 100 Hz
Vibration amplitude: 2 nm
Surface detection threshold level: 50 N/m

In the AFM colloid probe method, a silica probe particle having a diameter of 10 $\mu$m was immobilized to the tip of an AFM cantilever, and the thickened CPBs (e.g., thickened PMMA brushes) formed on a silicon substrate were analyzed for force curve measurement, using an AFM available from JPK Instruments, or an AFM available from Seiko Instruments.

Specifically, the thickened PMMA brushes ($M_n$ = 2,760,000, PDI ($M_w/M_n$) = 1.15, $L_d$ = 1245 nm, $\sigma$ = 0.32 chain/nm$^2$, and $\sigma^*$=0.18) formed on silicon substrates were analyzed for force curve measurement in a solvent of o-dichlorobenzene, using an AFM available from JPK Instruments, and using cantilevers having a different spring constant (0.57 N/m, 3.3 N/m, 51 N/m).

The force F (N) relative to the cantilever displacement and the repulsive force/colloid radius F/R (N/m) were determined.

The compressive elasticity modulus (Young's modulus) was calculated from the force curve in the premise of Hertz contact.

In the following equation, the elasticity modulus E of CPB is calculated from the indentation $\delta$, the Poisson ratio v, the colloid radius R and the force F.

$$F = \frac{4ER^{0.5}\delta^{1.5}}{3-3\nu^2}$$

The Poisson ratio is 0.5.

To determine the equilibrium swollen film thickness ($L_e$), a part of the polymer brush layer on the silicon substrate was scratched, and the area around the scratched part was observed (AFM imaging) to evaluate the height difference profile for force curve offset correction.

In this, a cantilever having a spring constant of 0.57 N/m was used.

(4) Results and Discussion

PMMA brushes were synthesized by SI-ATRP in the presence of complexes of Cu(I)Br and Cu(II)$Br_2$ at 60°C and under a high pressure of 500 MPa.

Fig. 14 shows plots of "dry thickness $L_d$ of film of PMMA brushes" and "mean molecular weight $M_n$ of free PMMA". The free PMMA is a PMMA synthesized with a free initiator along with a silicon wafer.

In Fig. 14, $[EBIB]_0$ = 0.047 mM, $[Cu(I)Br]_0$+$[Cu(II)Br_2]_0$ = 16.85 mM.

In Fig. 14, $L_d$ and $M_n$ show narrow distribution and linear correlation, confirming controlled polymerization. The maximum value of $L_d$ reached 2 $\mu$m.

With the increase in the amount of the catalyst Cu(II)$Br_2$, the graft density ($\sigma$) of the PMMA brushes reached a maximum value 0.35 (chain/nm$^2$).

Further, $M_n$ of the graft PMMA was investigated for the characteristics thereof in a cut-off experiment of isolating it from the silicon substrate.

Regarding the molecular weight, in the cut-off experiment, the free PMMA and the graft PMMA had the same value.

These results show that synthesis of PMMA CPBs having a micrometer-level thickness proceeded well.

In polymerization under the condition shown in Table 1, thickened CPBs can also be obtained.

As an immobilization initiator, (2-bromoisobutyryloxy)propyltrimethoxysilane (BPE) or (2-bromoisobutyryloxy)propyltrimethoxysilane (BPM) may also be sued in place of BHE (Table 1, Run 1).

Solution polymerization with a solvent of anisole added thereto under a reduced pressure of 400 MPa also gives thickened CPBs having similar characteristics (Table 1, Run 2).

Using a monomer of hexyl methacrylate (HMA), lauryl methacrylate (LMA) or synthetic lauryl methacrylate ($C_{12}$-$C_{13}$) (SLMA, Blemmer SLMA-S by NOF Corporation) in place of MMA gives graft chains corresponding thereto (Table 1, Runs 3 and 4).

Polymerization runs on even in the absence of a free low-molecular initiator, EBIB. For example, by prolonging the polymerization time, film thickening to approximately 5 $\mu$m can be attained (Table 1, Run 5).

ATRP using a solvent of an ionic liquid also attained film thickening. For example, surface-initiated ATRP using a solvent of an ionic liquid DEME-TFSI (N,N-diethyl-N-(2-methoxyethyl)-N-methylammonium bis(trifluoromethyl sulfonylimide)) and using copper(I) chloride (Cu(I)Cl) or copper(II) chloride (Cu(II)$Cl_2$) under a pressure of 100 MPa gives thickened CPBs (Table 1, Run 6).

Further, in ATRP using a solvent of an ionic liquid under the condition of prolonging the polymerization time and not using a free low-molecular initiator, further increased film thickness can be expected. For example, surface-initiated ATRP using a solvent of an ionic liquid BMI-$PF_6$ (1-n-butyl-3-methylimidazolium hexafluorophosphate) under normal pressure also gives thickened CPBs (Table 1, Runs 7 and 8).

Similarly, surface-initiated ATRP of an ionic liquid-type monomer in an ionic liquid gives thickened CPBs. For example, surface-initiated ATRP of ionic liquid monomer DEMM-TFSI (N,N-diethyl-N-(2-methacryloylethyl)-N-methylammonium bis(trifluoromethyl sulfonyl)imide under normal pressure using an immobilization initiator of 3-((3-triethoxysilyl)propyl)thio)propyl-2-bromo-2-methylpropanate (BPTPE) in a solvent of an ionic liquid DEME-TFSI in the presence of CuCl, $CuCl_2$, and 2,2-bipyridine (bby) gives thickened CPBs (Table 1, Run 9).

Adding a bicrosslinking monomer to a polymerization solution gives a crosslinked brush. For example, high-pressure surface-initiated ATRP using a crosslinking agent of ethylene glycol dimethacrylate (EGDMA) gives thickened crosslinked CPBs (Table 1, Run 10). In this, absence of a free low-molecular initiator can prevent gelling of the entire system. The resultant crosslinked CPBs were isolated from the substrate using hydrofluoric acid, and checked for solubility thereof. All these were insoluble in every good solvent, confirming progression of crosslinking therein.

Table 1 - Polymerization Results[1)]

| Run | Substrate | Immobilization Initiator | Polymerization Condition | Pressure (MPa) | Polymerization Time (min) | Monomer Conversion (%) | $M_n$ (/ $10^6$) | $M_w/M_n$ | $L_d$ (nm) | σ (chain/nm$^2$) | σ* |
|---|---|---|---|---|---|---|---|---|---|---|---|
| 1 | Glass, Si wafer | BPE | [MMA]/[EBIB]/[Cu(I)Br]/[Cu(II)$Br_2$]/[dNbipy] =9.3/0.000047/0.015/0.0020/0.034(M), (molar ratio: 200,000/1/317/43/720) | 500 | 240 | 13 - 15 | 1.6 -2.0 | 1.1 - 1.3 | 780 - 800 | 0.29 - 0.34 | 0.16 - 0.19 |
| 2 | Glass, Si wafer | BPM/BPE | [MMA]/[EBIB]/[Cu(I)Br]/[Cu(II)$Br_2$]/[dNbipy] =4.7/0.000023/0.015/0.0017/0.034(M), anisole 50 wt% (molar ratio: 200,000/1/648/72/1440) | 400 | 240 | 11 -20 | 2.0 - 3.0 | 1.4 | 800 - 1,100 | 0.25 - 0.39 | 0.14 - 0.22 |
| 3 | Si wafer | BPE | [HMA]/[EBIB]/[Cu(I)Br]/[Cu(II)$Br_2$]/[dNbipy] =5.1/0.000025/0.0086/0.00056/0.018(M), (molar ratio: 200,000/1/338/22/720) | 500 | 240 | 9 - 12 | 2.2 - 2.5 | 1.2 | 620 - 660 | 0.16 - 0.17 | 0.18 -0.19 |
| 4 | Glass, Si wafer | BPM/BPE | [SLMA]/[EBIB]/[Cu(I)Br]/[Cu(II)$Br_2$]/[dNbipy] =1.8/0.000018/0.018/0.00077/0.038(M), anisole 50 wt% (molar ratio: 100,000/1/1015/43.2/2116.4) | 400 | 120 - 240 | 21 | 4.2 - 6.1 | 1.2 - 1.4 | 1,000 - 2,070 | 0.13 | 0.24 -0.33 |
| 5 | Si wafer | BPE | [MMA]/[EBIB]/[Cu(I)Br]/[Cu(II)$Br_2$]/[dNbipy] =9.3/0/0.015/0.0019/0.034(M) | 500 | 120 - 2,880 | trace | - | - | 5,00 - 4,600 | - | - |

(continued)

| Run | Substrate | Immobilization Initiator | Polymerization Condition | Pressure (MPa) | Polymerization Time (min) | Monomer Conversion (%) | $M_n$ (/ $10^6$) | $M_w/M_n$ | $L_d$ (nm) | σ (chain/$nm^2$) | σ* |
|---|---|---|---|---|---|---|---|---|---|---|---|
| 6 | Si wafer | BPE | [MMA]/[EBIB]/[Cu(I)Cl]/[Cu(II)$Cl_2$]/[dNbipy] =3.1/0.000031/0.0053/0.00011/0.012(M), DEME-TFSI 75 wt% (molar ratio: 100,000/1/170/3.5/382) | 100 | 60 | 28 | 1.16 | 1.20 | 460 | 0.28 | 0.16 |
| 7 | Si wafer | BPE | [MMA]/[EBIB]/[Cu(I)Cl]/[Cu(II)$Cl_2$]/[dNbipy] =4.7/0.000047/0.0093/0.00019/0.0094(M), BMI-$PF_6$ 50 vol% (molar ratio: 100,000/1/198/4.0/202) | 0.1 | 1,350 | 44 | 3.16 | 1.39 | 1,277 | 0.29 | 0.16 |
| 8 | Si wafer | BPE | [MMA]/[EBIB]/[Cu(I)Cl]/[Cu(II)$Cl_2$]/[dNbipy] =4.7/0/0.0093/0.00020/0.0094 (M), BMI-$PF_6$ 50 vol% | 0.1 | 240 - 1,980 | trace | 0.5 - 2.16 | 1.1 - 1.65 | 600 - 1,353 | 0.45 | 0.25 |
| 9 | Si wafer | BPTPE | [DEMM-TFSI]/[EBIB]/[Cu(I)Cl]/[Cu(II)$Cl_2$]/[bpy] =5.8/0.00047/0.0047/0.0016/0.019(M), DEME-TFSI (molar ratio: 5000/1/20/5/50) | 0.1 | 1,800 | 94 | 0.53 | 1.26 | 505 | 0.19 | 0.42 |
| 10 | Si wafer | BPE | [MMA]/[EGDMA]/[EBIB]/[Cu(I)Br]/[Cu(I)$Br_2$]/[dNbipy] =7.0/0.07/0/0.015/0.0020/0.037 (M), anisole 25 wt% | 400 | 300 | trace | - | - | 70 - 340 | - | - |

Note 1): Polymerization temperature: 60°C, but 70°C only in Run 9

Regarding the tribological properties of the synthesized PMMA brushes (thickness $L_d$ = 950 nm, graft density $\sigma$ = 0.3), the frictional force and the frictional coefficient ($\mu$) thereof were measured both in microscale and in macroscale, using an atomic force microscope (AFM) and a tribometer.

In microscale measurement, Fig. 15(a) shows plots of the frictional coefficient ($\mu$) vs the shear velocity (v) of the PMMA brushes in toluene at $F_n$ = 20 nN. The data in Fig. 15(a) are grouped in two regions of boundary lubrication and hydrodynamic lubrication, owing to the action of the shear velocity (v).

In the boundary lubrication regime, the frictional coefficient ($\mu$) was not dependent on the shear velocity (v) almost at the same plots. In this regime, an ultralow frictional coefficient ($\mu$) on a level of $10^{-4}$ was observed.

On the other hand, in the regime of a high shear velocity (v) (v > 30 $\mu$m/s), the shear velocity (v) was dependent on the frictional coefficient ($\mu$) (the two were correlated with each other), and this is known as a characteristic feature of hydrodynamic lubrication.

In macroscale measurement, the glass lens was kept under a loaded state in contact with the rotating disc. Fig. 15(b) shows plots of the frictional coefficient ($\mu$) vs $\nu/F_n$ of the PMMA brushes in DEME-TFSI (N,N-diethyl-N-2-methoxyethyl)-N-methylammonium bis(trifluoromethylsulphonyl imide, a type of ionic liquid solvent) at $F_n$ of 0.1 to 4 N.

Also in Fig. 15(b), similar boundary lubrication and hydrodynamic lubrication regimes were observed. Also in the microscale experiment, the frictional coefficient ($\mu$) in the boundary lubrication regime was extremely small on a level of $10^{-3}$.

The details of the relationship between the tribological properties and the thickness were clarified.

(5) Discussion Based on Stribeck Curve

Fig. 16 shows a schematic view of a ball-on-test with a tribometer (Bruker UMT TriboLab) for obtaining a stribeck curve.

Fig. 17 shows a stribeck curve (load: 0.1 to 4 N) of thickened PPMA brushes in an ionic liquid (DEME-TFSI). As compared with the case of no brush, a significant decrease in the frictional coefficient (expansion of liquid lubrication region) is recognized in the high load/low speed region.

Fig. 18 shows a stribeck curve (high load condition) of thickened PPMA brushes in an ionic liquid (DEME-TFSI). This reveals that, in a higher load region, the stribeck curve has a threshold owing to the high viscosity of the swollen CPB layer. This means that, in the case where any external stimuli such as vibration have occurred in a slide mechanism, the brushes can function as a safety layer (buffer layer) to evade troubles such as seizing between base materials. This is one characteristic feature of the SRT material having both flexibility and resilience.

Fig. 19 shows a stribeck curve (load: 5 N)) of PDEMM-TFSI (ionic liquid type) brushes in an ionic liquid (DEME-TFSI). It is known that the brushes have a low frictional coefficient on a level of $10^{-3}$ or so, in the boundary lubrication regime.

Fig. 20 shows stribeck curve data comparison between thickened PMMA brushes and thickened PDEMM-TFSI (ionic liquid type) brushes in an ionic liquid (DEME-TFSI). This suggests that DEME-TFSI is a good solvent for both brush types, and could form a common stribeck curve. Specifically, it is understood that, in a low-load and high-speed region, the brushes exhibit fluid lubrication characteristics on the same level, and in a high-load and low-speed region, the brushes exhibit load-dependent boundary lubrication characteristics corresponding to the function as a buffer layer as one characteristic feature of an SRT material.

Fig. 21 shows a stribeck curve (load: 0.1 N) of thickened poly(synthetic lauryl methacrylate) (PSLMA) (lipophilic) brushes in polyol ester (POE) lubricating oils (three types: linear and branched types) in a category of industrial lubricating oils. With those POE oils that are used as lubricating oils, the brushes, when selected appropriately, attained stable fluid lubrication.

(6) Discussion Based on Compressive Elasticity Modulus

Fig. 22 shows measurement results of compressive elasticity modulus of thickened PMMA brushes in an ionic liquid (DEME-TFSI) obtained according to a nanoindentation method.

This shows the results of measurement of the "thickened PMMA brushes" described in the section of "Method for Measurement of Indentation and Compressive Elasticity Modulus of SRT Material" given hereinabove, and the measurement was made two times according to the above-mentioned method.

The compressive elasticity modulus was almost constant (about 200 MPa) from the brush surface to a depth of about 800 nm. In a depth of about 800 nm or more, the compressive elasticity modulus suddenly increased, as influenced by the hard substrate.

Fig. 23 shows results of a force curve test of thickened PMMA brushes in an ionic liquid (DEME-TFSI) obtained according to an atomic force microscope colloid probe method. This measurement can show an indentation of at most 10% (460 nm) of the mean swollen film thickness $L_e$.

With the increase in the indentation depth, the compressive elasticity modulus increased. When the indentation

depth is 100, 200, 300 or 400 nm, the swollen, thickened PMMA-CPB showed a value of E = 0.049, 0.44, 1.5, or 3.7 MPa.

Further, thickened PMMA brushes ($M_n$ = 1,650,000, PDI($M_w/M_n$) = 1.27, $L_d$ = 730 nm, $\sigma$ = 0.31 chain/nm$^2$, and $\sigma$ *=0.17) were tested for force curve measurement, using a solvent of o-dichlorobenzene, DEME-TFSI or MEMP-TFSI and using a cantilever having a spring constant of 0.15 N/m and given a silica colloid having a radius of 5 $\mu$m at the tip thereof.

As a result, the indentation depth was confirmed to be 100 nm or more in every solvent.

Similarly, thickened PSLMA brushes ($M_n$ = 3,640,000, PDI($M_w/M_n$) = 1.21, $L_d$ = 1,000 nm, $\sigma$ = 0.15 chain/nm$^2$, and ($\sigma$*=0.28) were tested for force curve measurement, using a solvent of hexadecane or poly-$\alpha$-olefin (PA0-05) and using a cantilever having a spring constant of 0.15 N/m and given a silica colloid having a radius of 5 $\mu$m at the tip thereof.

As a result, the indentation depth was confirmed to be 100 nm or more in every solvent.

(7) Discussion Based on Crosslinking Agent Concentration relative to Swelling Degree

Crosslinked brushes were synthesized according to surface-initiated ATRP using a crosslinking agent (divinyl monomer). During polymerization, it was confirmed that the crosslinking agent added did not cause polymerization inhibition.

The resultant crosslinked brushes had a thickness of several dozen nm or so under normal pressure condition, but under an increased pressure, the thickness thereof greatly increased.

In a good solvent (e.g., o-dichlorobenzene), the swelling degree of the polymer brush layer was measured according to an AFM colloid probe method.

Fig. 24 shows an influence of the crosslinking agent concentration on the swelling degree of the crosslinked brushes. With the increase in the added crosslinking agent concentration, the swelling degree decreased, which suggests effective formation of crosslinking structures. It was confirmed that, when 1 mol% of divinyl monomer was added to the monomer, the polymer brush layer cut out of the surface of the substrate did not dissolve a good solvent, that is, sufficiently effective crosslinking structures were formed in the layer.

(8) Conclusion

Employing ATRP under high pressure, the present inventors succeeded in synthesis of extremely thick PMMA CPBs (thickened CPBs). The thickness of the synthesized PMMA brushes (thickened PMMA-CPBs) reached a micrometer level.

Microscale and macroscale friction properties of thickened CPBs were measured, and in both scales, thickened CPBs were confirmed to have an ultralow frictional coefficient ($\mu \leq 10^{-3}$).

In macroscale systems, that is, in practical lubrication systems to be influenced by various machine elements, the thickened CPBs produced through ATRP function effectively.

(9) Usefulness of SRT Material (lubricant)

The SRT material (lubricant) containing thickened CPBs of the present invention can be used for bearings, seals and guides (guiding mechanisms), and the present invention provides the SRT material. The technology including thickened CPBs brings about slide members satisfying both flexibility (having a large indentation amount and a large compressive elasticity modulus) and ultralow friction properties (having a small frictional coefficient) (Fig. 2).

Applying a high-pressure LRP method to CPB synthesis, the present invention attained thickening of CPBs (to a thickness of 5 $\mu$m or so). Macroscale measurement according to the present invention provides a stribeck curve of CPBs that indicates the influence of the viscosity, the mean velocity and the normal load of a lubricant on the frictional coefficient of a lubricant surface, and, relating to lubrication mechanisms, this can be a basis of machine planning.

The thickened CPBs of the present invention are practically usable as an SRT material (lubricant and slide member).

## Claims

1. A material for slide mechanisms comprising a thickened polymer brush, wherein:

   the thickened polymer brush has a dry thickness of 500 nm or more,
   the dry thickness is measured according to gel permeation chromatography and ellipsometry; and
   the thickened polymer brush consists of an addition polymer that bonds to a polymerization initiation group residue.

2. The material according to claim 1, wherein the thickened polymer brush has a molecular weight distribution index of 1.5 or less, and the molecular weight index distribution index is determined by size exclusion chromatography.

3. The material according to claim 1, having an indentation amount of 100 nm or more and a compressive elasticity modulus of 1 MPa or more, wherein:

the indentation amount is measured in a swollen state by an atomic force microscope colloid probe method with a cantilever of a spring constant of 0.15 N/m having a tip with a silica colloid of 5 μm radius, and
the compressive elasticity modulus is measured in a swollen state by a nanoindentation method with a Berkovich indenter.

4. The material according to claim 3, wherein the thickened polymer brush has a molecular weight distribution index of 1.5 or less, and the molecular weight distribution index is determined by size exclusion chromatography.

5. The material according to any of claims 1 to 4, wherein the thickened polymer brush has a crosslinked structure.

6. The material according to any of claims 1 to 5, containing a lubricating liquid and having a frictional coefficient (μ) of 0.1 or less, wherein the frictional coefficient is measured in a swollen state by a ball-on-disc test in which the material is given to both of a glass ball having a radius of curvature of 7.79 mm and a glass substrate, and frictional force ($F_S$) is measured under a load ($F_n$) of 0.1 to 40 N and at a rotation speed of 10 to 2000 rpm to give the frictional coefficient as a ratio of $F_s$ to $F_n$ ($F_s/F_n$).

7. The material according to claim 6, having a compressive elasticity modulus of 1 MPa or more and a frictional coefficient (μ) of 0.1 or less, wherein the compressive elasticity modulus is measured in a swollen state by a nanoindentation method with a Berkovich indenter.

8. The material according to claim 7, wherein the thickened polymer brush is a concentrated polymer brush.

9. The material according to any one of claims 1 to 8, wherein the thickened polymer brush has a dry thickness of 700 nm or more.

10. The material according to any one of claims 1 to 9, wherein the thickened polymer brush contains a polymer of at least one monomer selected from methyl acrylate, ethyl acrylate, propyl acrylate, butyl acrylate, methyl methacrylate, ethyl methacrylate, propyl methacrylate, and butyl methacrylate.

**Patentansprüche**

1. Material für Gleitvorrichtungen, umfassend eine verdickte Polymerbürste, wobei:

die verdickte Polymerbürste eine Trockendichte von 500 nm oder mehr aufweist,
die Trockendichte mit Hilfe von Gelpermeationschromatographie und Ellipsometrie gemessen wird, und
die verdickte Polymerbürste aus einem Additionspolymer besteht, das an einen Polymerisationsinitiierungsgruppenrest bindet.

2. Material nach Anspruch 1, wobei die verdickte Polymerbürste einen Index der Molekulargewichtsverteilung von 1,5 oder weniger aufweist, und der Index der Molekulargewichtsverteilung durch Größenausschluss-Chromatographie bestimmt wird.

3. Material nach Anspruch 1, welches einen Eindrückwert von 100 nm oder mehr und einen Druck-Elastizitäts-Modul von 1 MPa oder mehr aufweist, wobei:

der Eindrückwert in gequollenem Zustand durch ein Rasterkraftmikroskop-Kolloid-Sondenverfahren mit einem Ausleger einer Federkonstante von 0,15 N/m gemessen wird, welcher eine Spitze mit einem Quarzkolloid von 5 μm Radius aufweist, und
der Druck-Elastizitäts-Modul in gequollenem Zustand durch ein Nanoindentationsverfahren mit einem Berkovich-Indenter gemessen wird.

4. Material nach Anspruch 3, wobei die verdickte Polymerbürste einen Index der Molekulargewichtsverteilung von 1,5 oder weniger aufweist, und der Index der Molekulargewichtsverteilung durch Größenausschluss-Chromatographie bestimmt wird.

5. Material nach einem der Ansprüche 1 bis 4, wobei die verdickte Polymerbürste eine vernetzte Struktur aufweist.

6. Material nach einem der Ansprüche 1 bis 5, welches eine Schmierflüssigkeit enthält und einen Reibungskoeffizienten ($\mu$) von 0,1 oder weniger aufweist, wobei der Reibungskoeffizient in gequollenem Zustand durch einen Kugel-auf-Scheibe-Test gemessen wird, bei dem das Material sowohl auf eine Glaskugel mit einem Krümmungsradius von 7,79 mm als auch auf ein Glassubstrat gegeben wird, und die Reibungskraft ($F_S$) unter einer Last ($F_n$) von 0,1 bis 40 N und bei einer Rotationsgeschwindigkeit von 10 bis 2000 U/min gemessen wird, um den Reibungskoeffizienten als Verhältnis von $F_S$ zu $F_n$ ($F_S/F_n$) zu ermitteln.

7. Material nach Anspruch 6, welches einen Druck-Elastizitäts-Modul von 1 MPa oder mehr und einen Reibungskoeffizienten ($\mu$) von 0,1 oder weniger aufweist, wobei der Druck-Elastizitäts-Modul in gequollenem Zustand mit einem Nanoindentationsverfahren mit einem Berkovich-Indenter gemessen wird.

8. Material nach Anspruch 7, wobei die verdickte Polymerbürste eine konzentrierte Polymerbürste ist.

9. Material nach einem der Ansprüche 1 bis 8, wobei die verdickte Polymerbürste eine Trockendicke von 700 nm oder mehr aufweist.

10. Material nach einem der Ansprüche 1 bis 9, wobei die verdickte Polymerbürste ein Polymer aus mindestens einem Monomer, ausgewählt aus Methylacrylat, Ethylacrylat, Propylacrylat, Butylacrylat, Methylmethacrylat, Ethylmethacrylat, Propylmethacrylat und Butylmethacrylat, aufweist.

**Revendications**

1. Matériau pour mécanismes de glissement comprenant un polymère en brosse épaissi, sachant que :

    le polymère en brosse épaissi a une épaisseur à sec de 500 nm ou plus,
    l'épaisseur à sec est mesurée par chromatographie par perméation de gel et ellipsométrie ; et
    le polymère en brosse épaissi est composé d'un polymère d'addition qui se lie à un résidu de groupe d'initiation de polymérisation.

2. Le matériau selon la revendication 1, sachant que le polymère en brosse épaissi a un indice de distribution de poids moléculaire de 1,5 ou moins, et l'indice de distribution de poids moléculaire est déterminé par chromatographie d'exclusion de taille.

3. Le matériau selon la revendication 1, ayant une quantité d'indentation de 100 nm ou plus et un module d'élasticité compressive de 1 MPa ou plus, sachant que :

    la quantité d'indentation est mesurée dans un état gonflé par un procédé de sonde colloïdale de microscope à force atomique avec un cantilever d'une constante de rappel de 0,15 N/m ayant une pointe avec un colloïde de silice de 5 $\mu$m de rayon, et
    le module d'élasticité compressive est mesuré dans un état gonflé par un procédé de nanoindentation avec un indenteur de Berkovich.

4. Le matériau selon la revendication 3, sachant que le polymère en brosse épaissi a un indice de distribution de poids moléculaire de 1,5 ou moins, et l'indice de distribution de poids moléculaire est déterminé par chromatographie d'exclusion de taille.

5. Le matériau selon l'une quelconque des revendications 1 à 4, sachant que le polymère en brosse épaissi a une structure réticulée.

6. Le matériau selon l'une quelconque des revendications 1 à 5, contenant un liquide lubrifiant et ayant un coefficient de friction ($\mu$) de 0,1 ou moins, sachant que le coefficient de friction est mesuré dans un état gonflé par un test de

bille sur disque dans lequel le matériau est soumis à la fois à une bille de verre ayant un rayon de courbure de 7,79 mm et un substrat de verre, et une force de friction ($F_S$) est mesurée sous une charge ($F_n$) de 0,1 à 40 N et à une vitesse de rotation de 10 à 2 000 t/mn pour donner le coefficient de friction comme un rapport de $F_s$ à $F_n$ ($F_s/F_n$).

**7.** Le matériau selon la revendication 6, ayant un module d'élasticité compressive de 1 MPa ou plus et un coefficient de friction ($\mu$) de 0,1 ou moins, sachant que le module d'élasticité compressive est mesuré dans un état gonflé par un procédé de nanoindentation avec un indenteur de Berkovich.

**8.** Le matériau selon la revendication 7, sachant que le polymère en brosse épaissi est un polymère en brosse concentré.

**9.** Le matériau selon l'une quelconque des revendications 1 à 8, sachant que le polymère en brosse épaissi a une épaisseur à sec de 700 nm ou plus.

**10.** Le matériau selon l'une quelconque des revendications 1 à 9, sachant que le polymère en brosse épaissi contient un polymère d'au moins un monomère sélectionné parmi l'acrylate de méthyle, l'acrylate d'éthyle, l'acrylate de propyle, l'acrylate de butyle, le méthacrylate de méthyle, le méthacrylate d'éthyle, le méthacrylate de propyle, et le méthacrylate de butyle.

Fig. 1

STRIBECK DIAGRAM

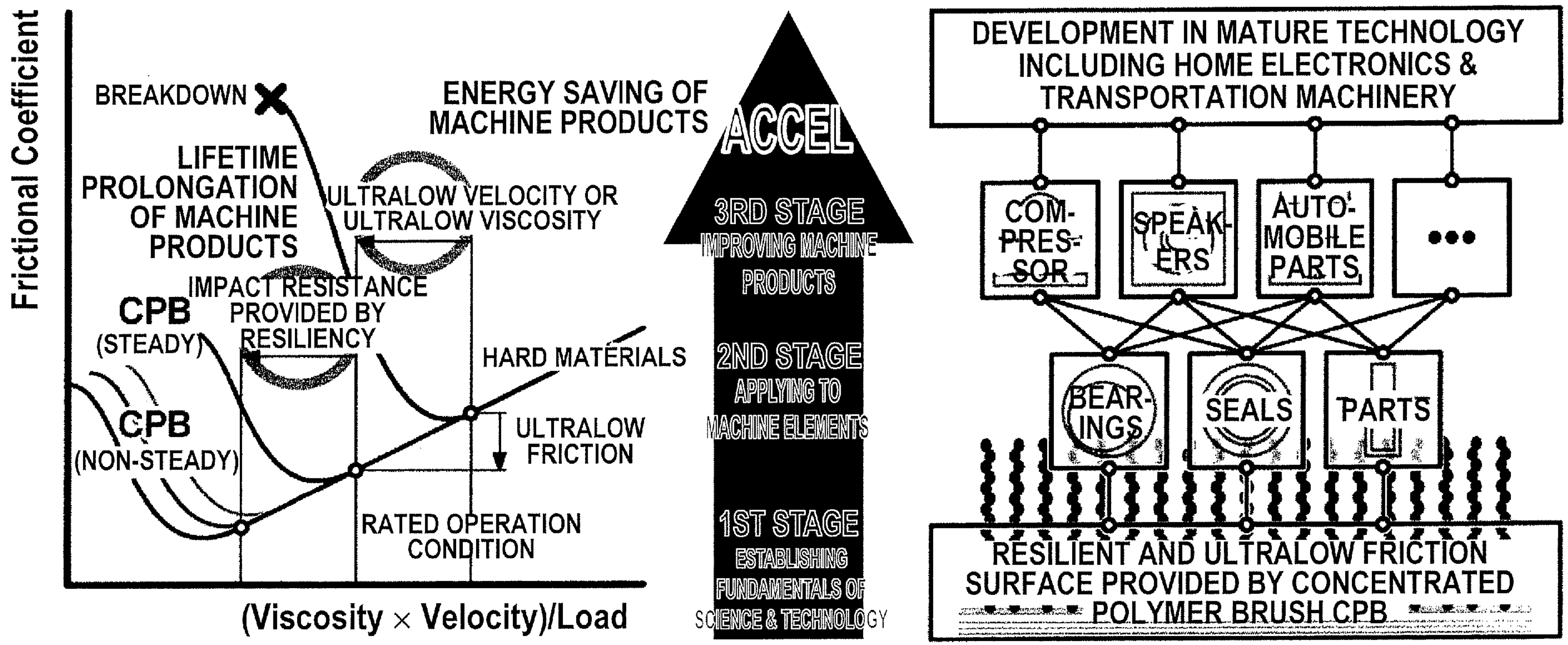

Fig. 2

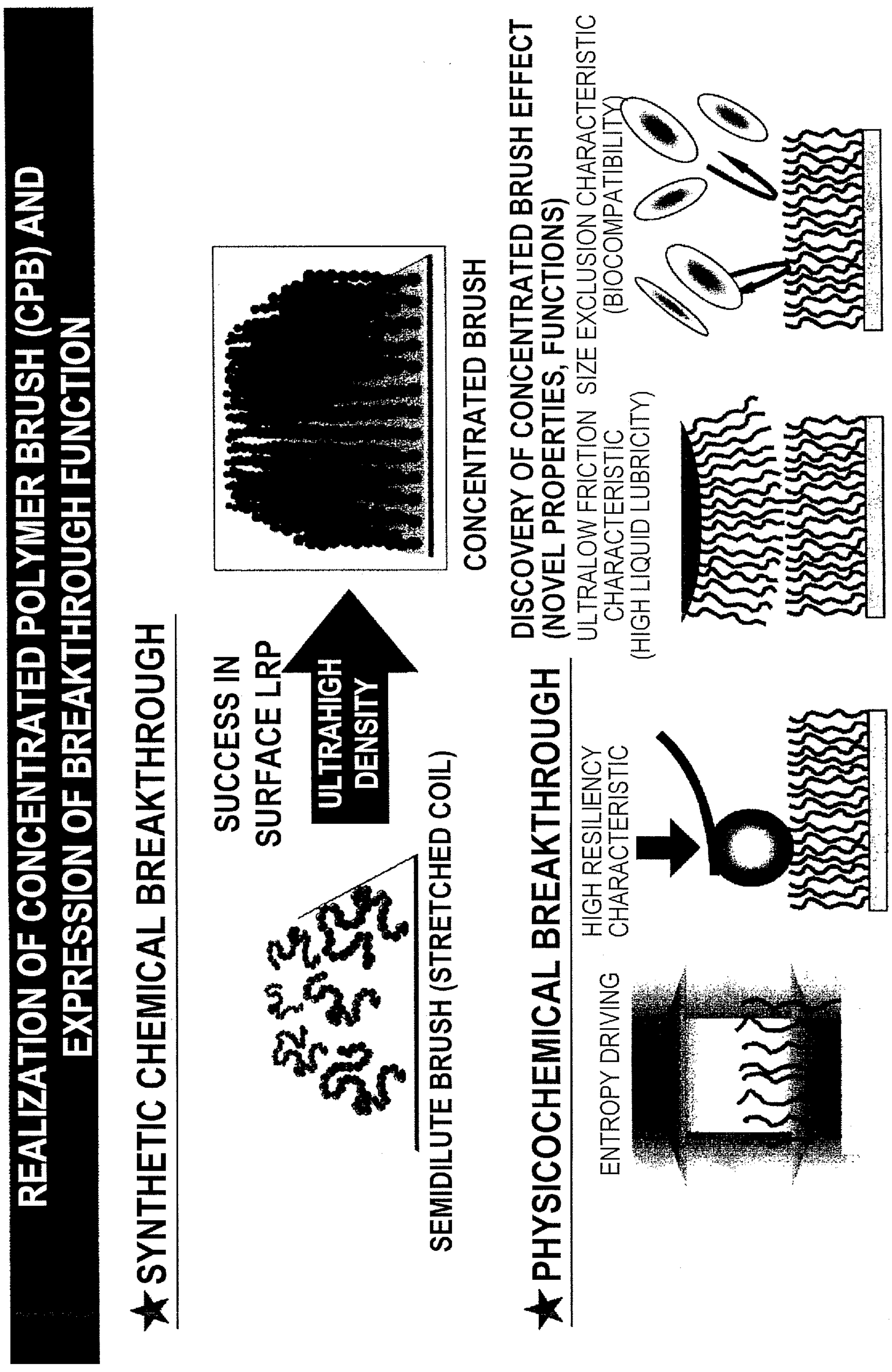
REALIZATION OF CONCENTRATED POLYMER BRUSH (CPB) AND EXPRESSION OF BREAKTHROUGH FUNCTION
★SYNTHETIC CHEMICAL BREAKTHROUGH
SUCCESS IN SURFACE LRP
ULTRAHIGH DENSITY
SEMIDILUTE BRUSH (STRETCHED COIL)
CONCENTRATED BRUSH
★PHYSICOCHEMICAL BREAKTHROUGH
DISCOVERY OF CONCENTRATED BRUSH EFFECT (NOVEL PROPERTIES, FUNCTIONS)
ENTROPY DRIVING
HIGH RESILIENCY CHARACTERISTIC
ULTRALOW FRICTION CHARACTERISTIC (HIGH LIQUID LUBRICITY)
SIZE EXCLUSION CHARACTERISTIC (BIOCOMPATIBILITY)

Fig. 3

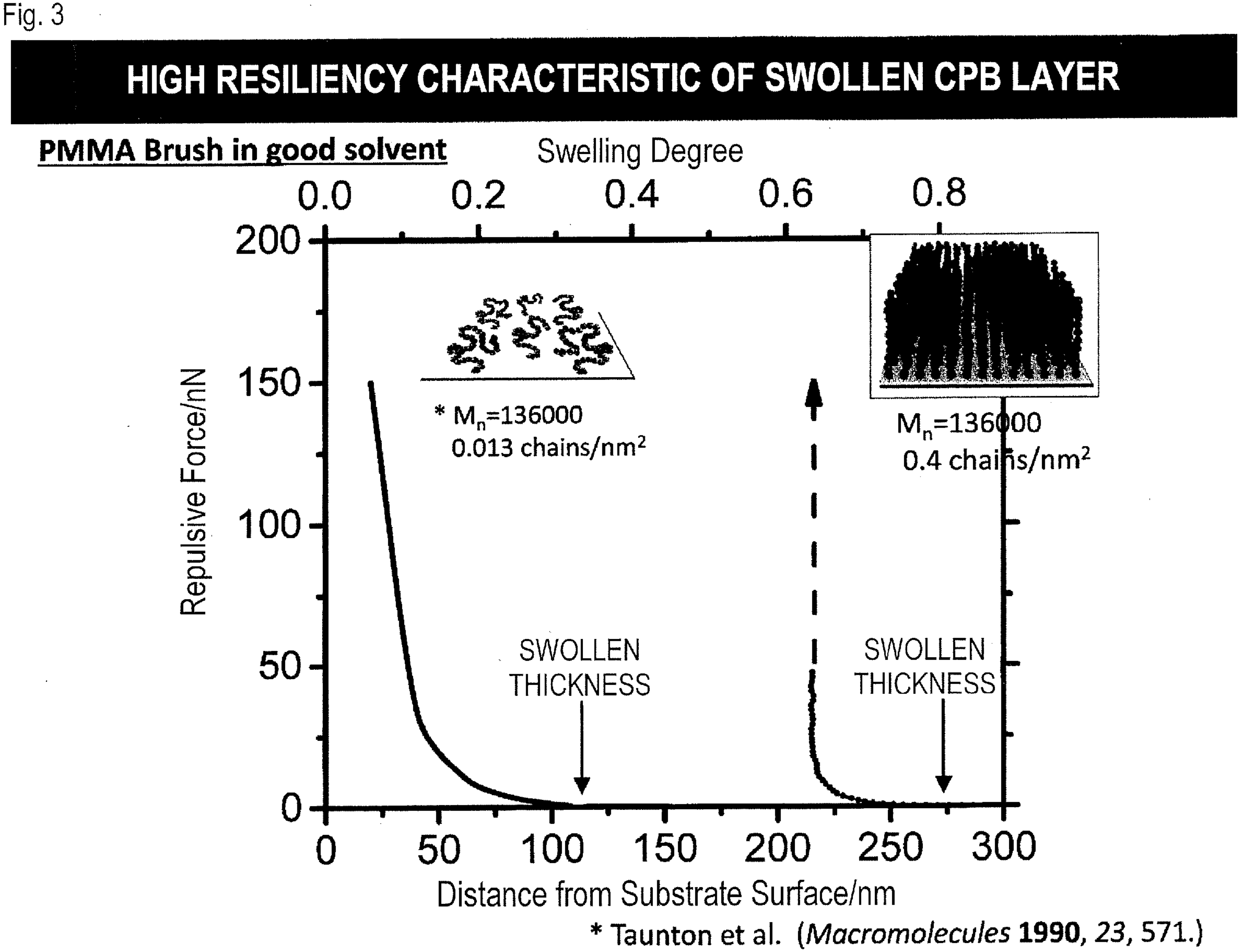
HIGH RESILIENCY CHARACTERISTIC OF SWOLLEN CPB LAYER
PMMA Brush in good solvent
Swelling Degree
0.0
0.2
0.4
0.6
0.8
200
150
100
50
0
Repulsive Force/nN
* M$_n$=136000
0.013 chains/nm$^2$
M$_n$=136000
0.4 chains/nm$^2$
SWOLLEN THICKNESS
SWOLLEN THICKNESS
0
50
100
150
200
250
300
Distance from Substrate Surface/nm
* Taunton et al. (*Macromolecules* **1990**, *23*, 571.)

Fig. 4

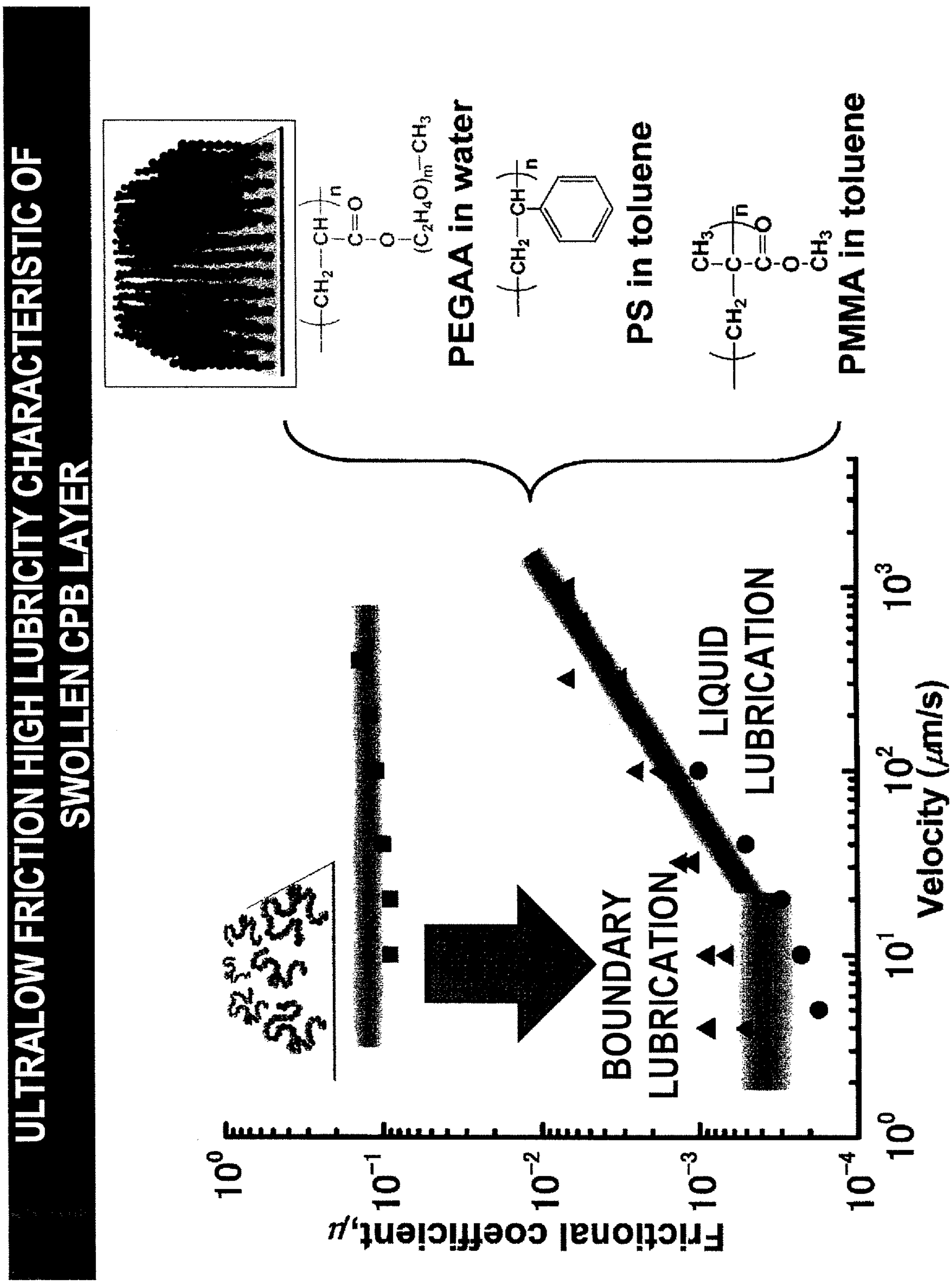
ULTRALOW FRICTION HIGH LUBRICITY CHARACTERISTIC OF SWOLLEN CPB LAYER
Frictional coefficient, μ
$10^0$
$10^{-1}$
$10^{-2}$
$10^{-3}$
$10^{-4}$
$10^0$
$10^1$
$10^2$
$10^3$
Velocity (μm/s)
BOUNDARY LUBRICATION
LIQUID LUBRICATION
PEGAA in water
PS in toluene
PMMA in toluene

Fig. 5

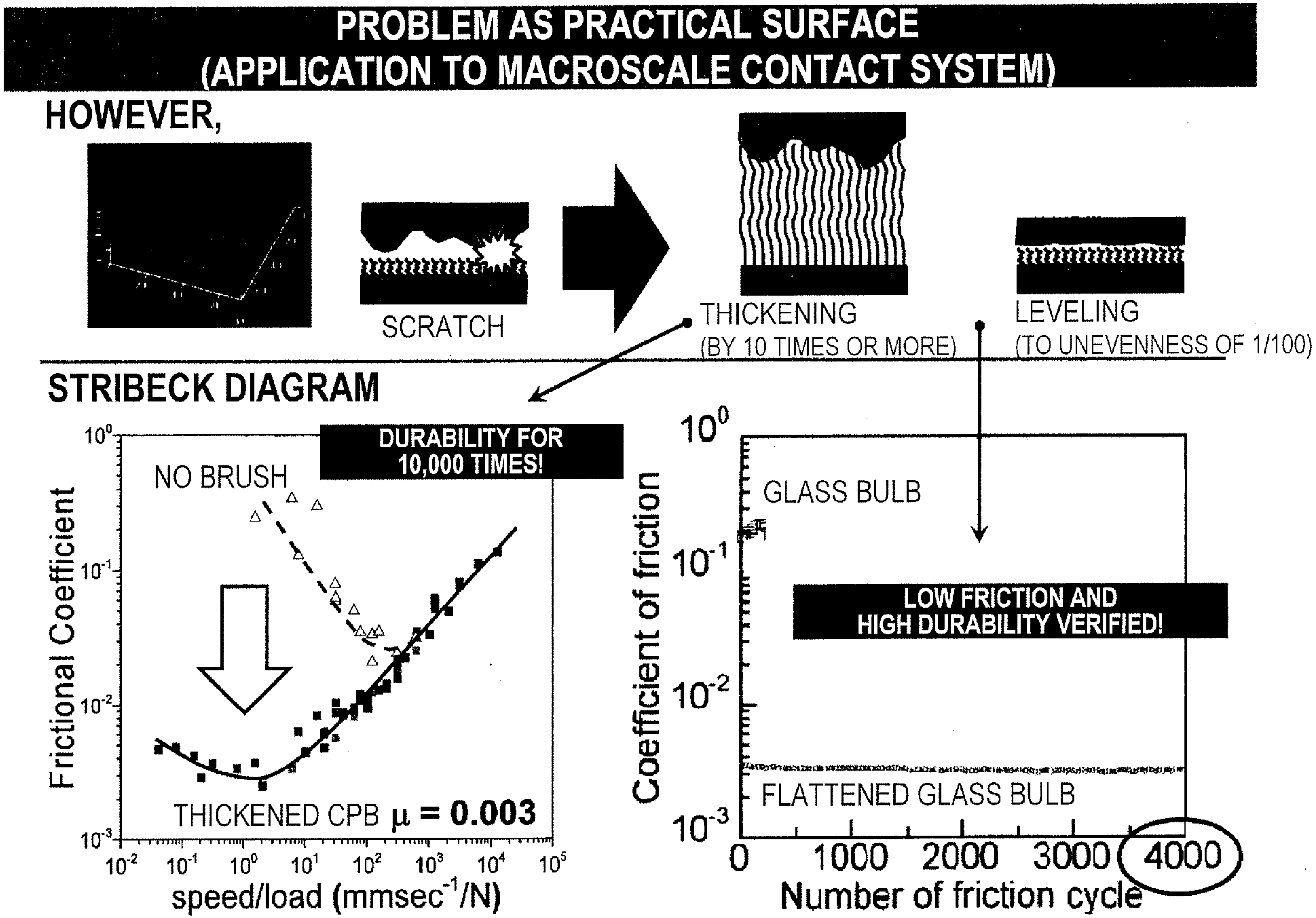
PROBLEM AS PRACTICAL SURFACE
(APPLICATION TO MACROSCALE CONTACT SYSTEM)
HOWEVER,
SCRATCH
THICKENING
(BY 10 TIMES OR MORE)
LEVELING
(TO UNEVENNESS OF 1/100)
STRIBECK DIAGRAM
DURABILITY FOR
10,000 TIMES!
NO BRUSH
THICKENED CPB μ = 0.003
Frictional Coefficient
speed/load (mmsec-1/N)
GLASS BULB
LOW FRICTION AND
HIGH DURABILITY VERIFIED!
FLATTENED GLASS BULB
Coefficient of friction
Number of friction cycle
0
1000
2000
3000
4000

Fig. 6

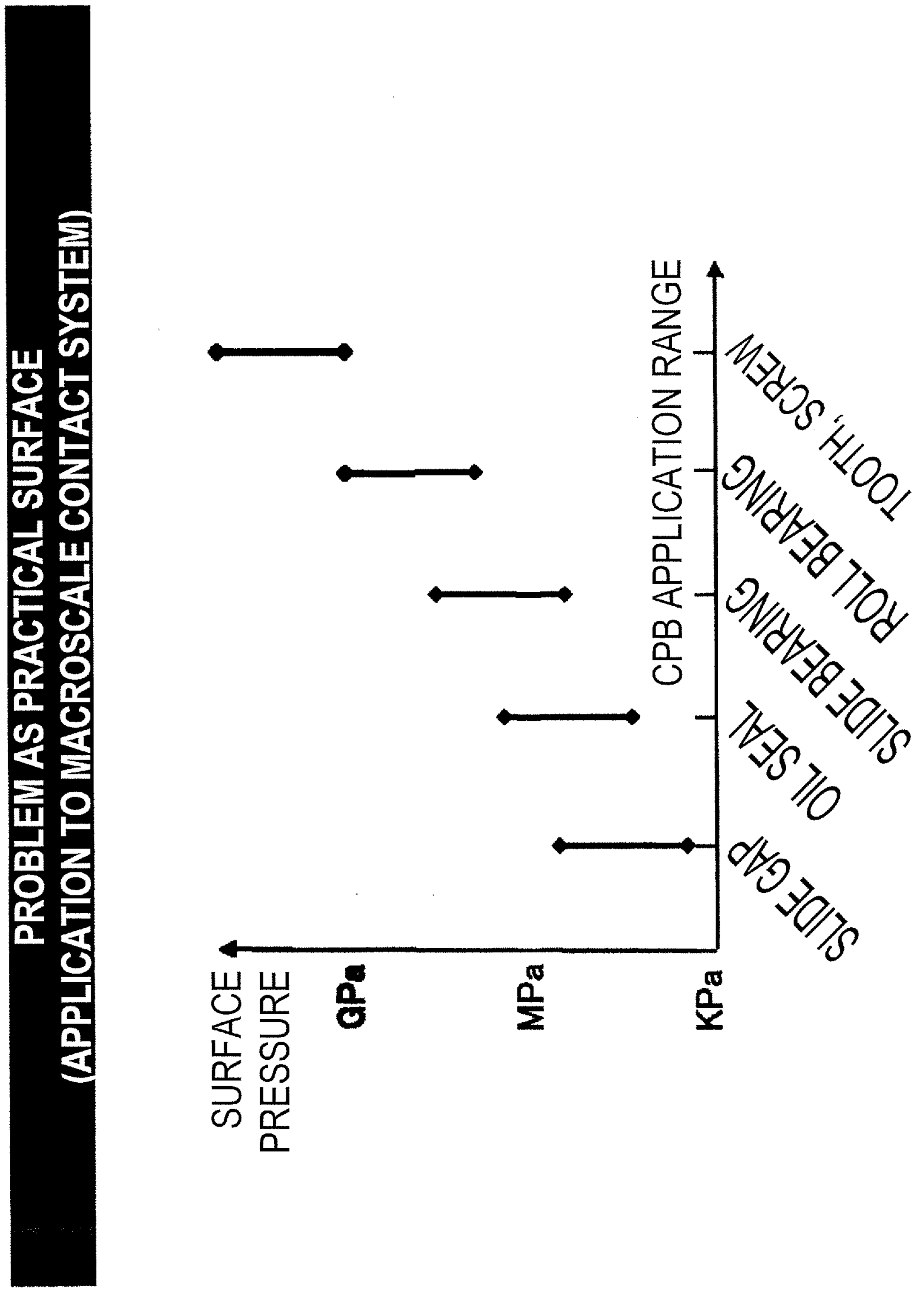
PROBLEM AS PRACTICAL SURFACE
(APPLICATION TO MACROSCALE CONTACT SYSTEM)
SURFACE PRESSURE
GPa
MPa
KPa
CPB APPLICATION RANGE
SLIDE GAP
OIL SEAL
SLIDE BEARING
ROLL BEARING
TOOTH, SCREW

Fig. 7

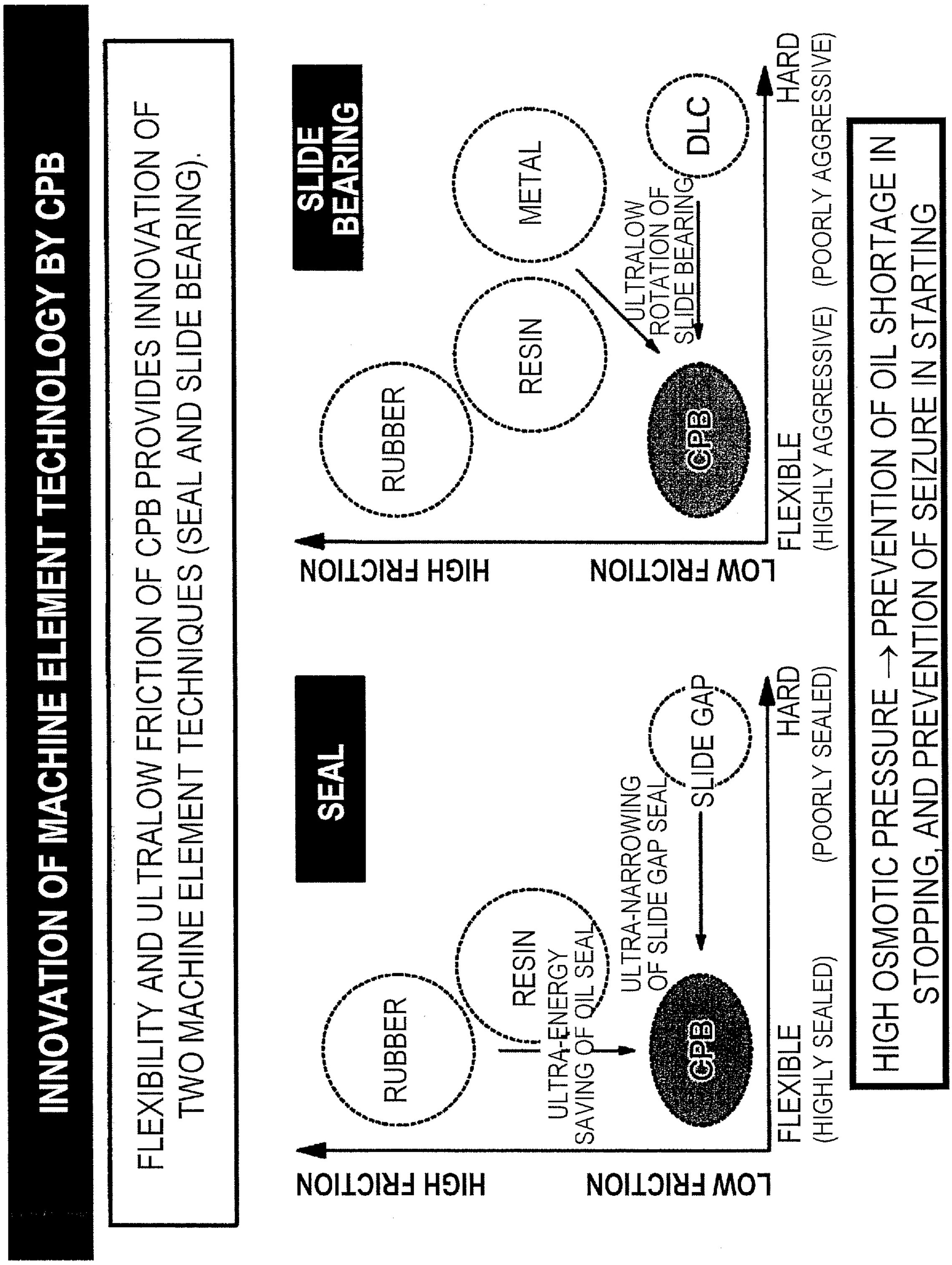

INNOVATION OF MACHINE ELEMENT TECHNOLOGY BY CPB
FLEXIBILITY AND ULTRALOW FRICTION OF CPB PROVIDES INNOVATION OF TWO MACHINE ELEMENT TECHNIQUES (SEAL AND SLIDE BEARING).
SEAL
HIGH FRICTION
LOW FRICTION
RUBBER
RESIN
CPB
SLIDE GAP
ULTRA-ENERGY SAVING OF OIL SEAL
ULTRA-NARROWING OF SLIDE GAP SEAL
FLEXIBLE
(HIGHLY SEALED)
HARD
(POORLY SEALED)
SLIDE BEARING
HIGH FRICTION
LOW FRICTION
RUBBER
RESIN
METAL
DLC
CPB
ULTRALOW ROTATION OF SLIDE BEARING
FLEXIBLE
(HIGHLY AGGRESSIVE)
HARD
(POORLY AGGRESSIVE)
HIGH OSMOTIC PRESSURE → PREVENTION OF OIL SHORTAGE IN STOPPING, AND PREVENTION OF SEIZURE IN STARTING

Fig. 8

**PARADIGM SHIFT REALIZED THROUGH THE PRESENT RESEARCH AND DEVELOPMENT**

TRIBOLOGY PARADIGM SHIFT OF "FROM HARD TO SOFT" AND "FROM STEADY TO NON-STEADY" PROVIDES LIFETIME PROLONGATION AND ENERGY SAVING OF MACHINE PRODUCTS.

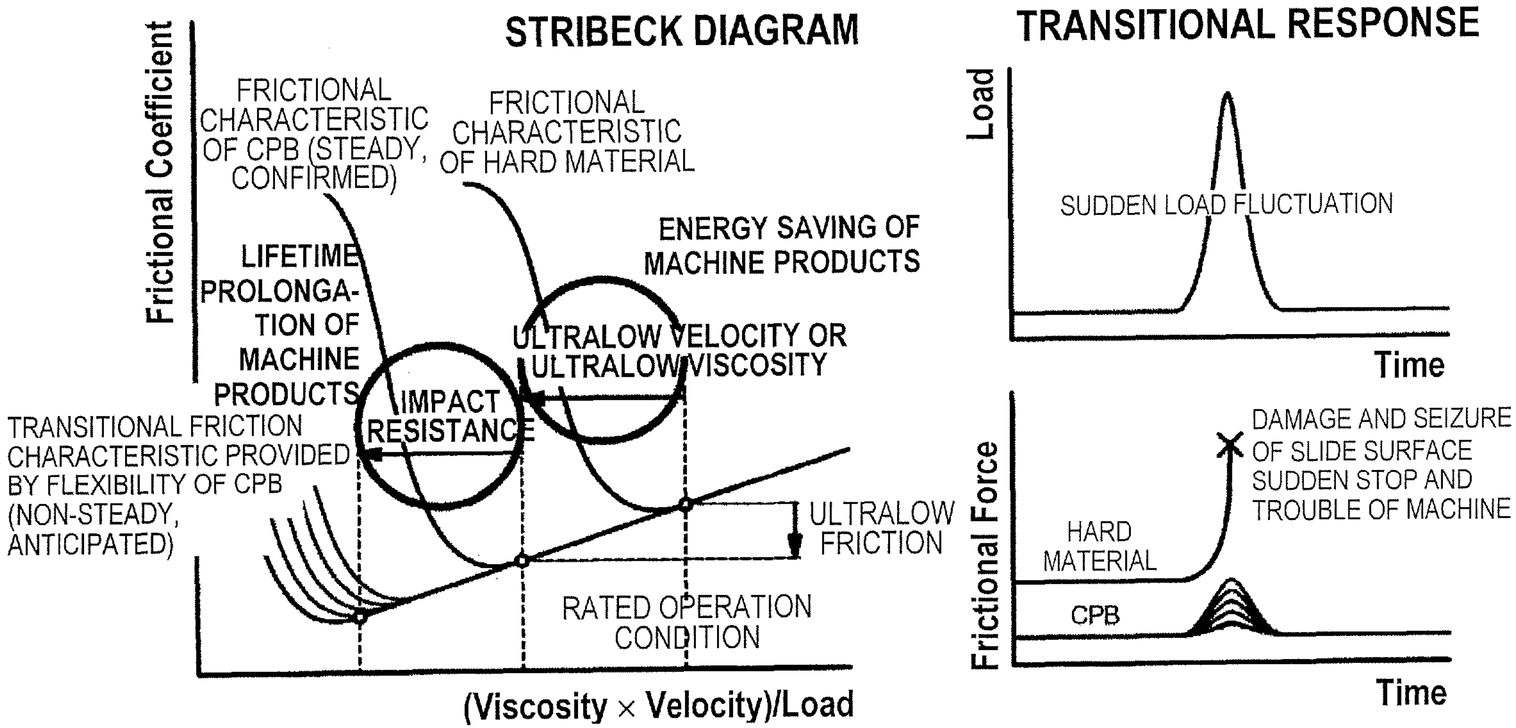

Fig. 9

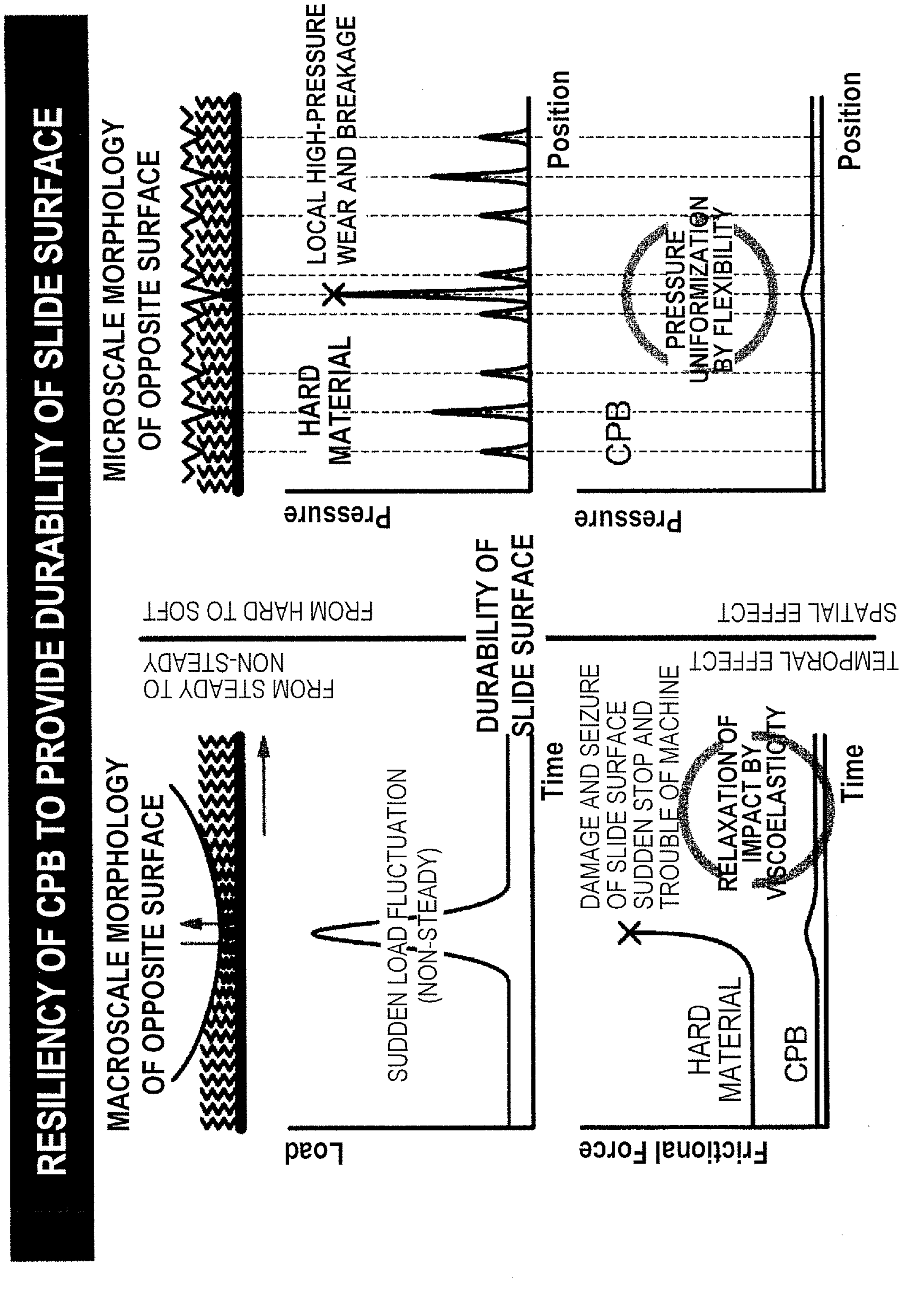
RESILIENCY OF CPB TO PROVIDE DURABILITY OF SLIDE SURFACE
MACROSCALE MORPHOLOGY OF OPPOSITE SURFACE
MICROSCALE MORPHOLOGY OF OPPOSITE SURFACE
FROM STEADY TO NON-STEADY
FROM HARD TO SOFT
DURABILITY OF SLIDE SURFACE
TEMPORAL EFFECT
SPATIAL EFFECT
Load
SUDDEN LOAD FLUCTUATION (NON-STEADY)
Time
Pressure
HARD MATERIAL
LOCAL HIGH-PRESSURE WEAR AND BREAKAGE
Position
Frictional Force
DAMAGE AND SEIZURE OF SLIDE SURFACE SUDDEN STOP AND TROUBLE OF MACHINE
HARD MATERIAL
CPB
RELAXATION OF IMPACT BY VISCOELASTICITY
Time
Pressure
CPB
PRESSURE UNIFORMIZATION BY FLEXIBILITY
Position

Fig. 10

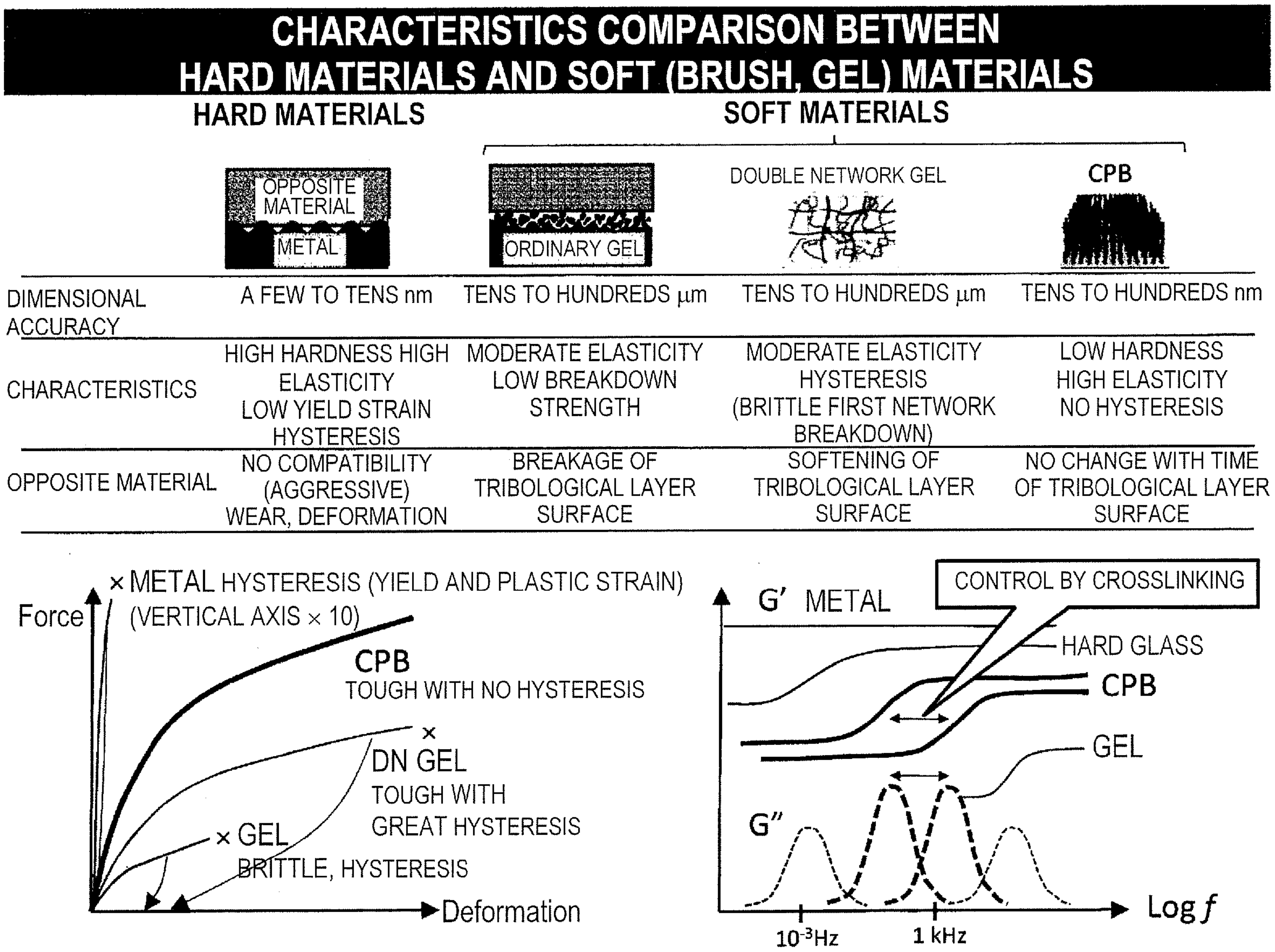
CHARACTERISTICS COMPARISON BETWEEN
HARD MATERIALS AND SOFT (BRUSH, GEL) MATERIALS
HARD MATERIALS
SOFT MATERIALS
OPPOSITE MATERIAL
METAL
ORDINARY GEL
DOUBLE NETWORK GEL
CPB
DIMENSIONAL ACCURACY
A FEW TO TENS nm
TENS TO HUNDREDS μm
TENS TO HUNDREDS μm
TENS TO HUNDREDS nm
CHARACTERISTICS
HIGH HARDNESS HIGH ELASTICITY LOW YIELD STRAIN HYSTERESIS
MODERATE ELASTICITY LOW BREAKDOWN STRENGTH
MODERATE ELASTICITY HYSTERESIS (BRITTLE FIRST NETWORK BREAKDOWN)
LOW HARDNESS HIGH ELASTICITY NO HYSTERESIS
OPPOSITE MATERIAL
NO COMPATIBILITY (AGGRESSIVE) WEAR, DEFORMATION
BREAKAGE OF TRIBOLOGICAL LAYER SURFACE
SOFTENING OF TRIBOLOGICAL LAYER SURFACE
NO CHANGE WITH TIME OF TRIBOLOGICAL LAYER SURFACE
Force
× METAL HYSTERESIS (YIELD AND PLASTIC STRAIN)
(VERTICAL AXIS × 10)
CPB
TOUGH WITH NO HYSTERESIS
×
DN GEL
TOUGH WITH
GREAT HYSTERESIS
× GEL
BRITTLE, HYSTERESIS
Deformation
G' METAL
CONTROL BY CROSSLINKING
HARD GLASS
CPB
GEL
G"
$10^{-3}$Hz
1 kHz
Log $f$

Fig. 11

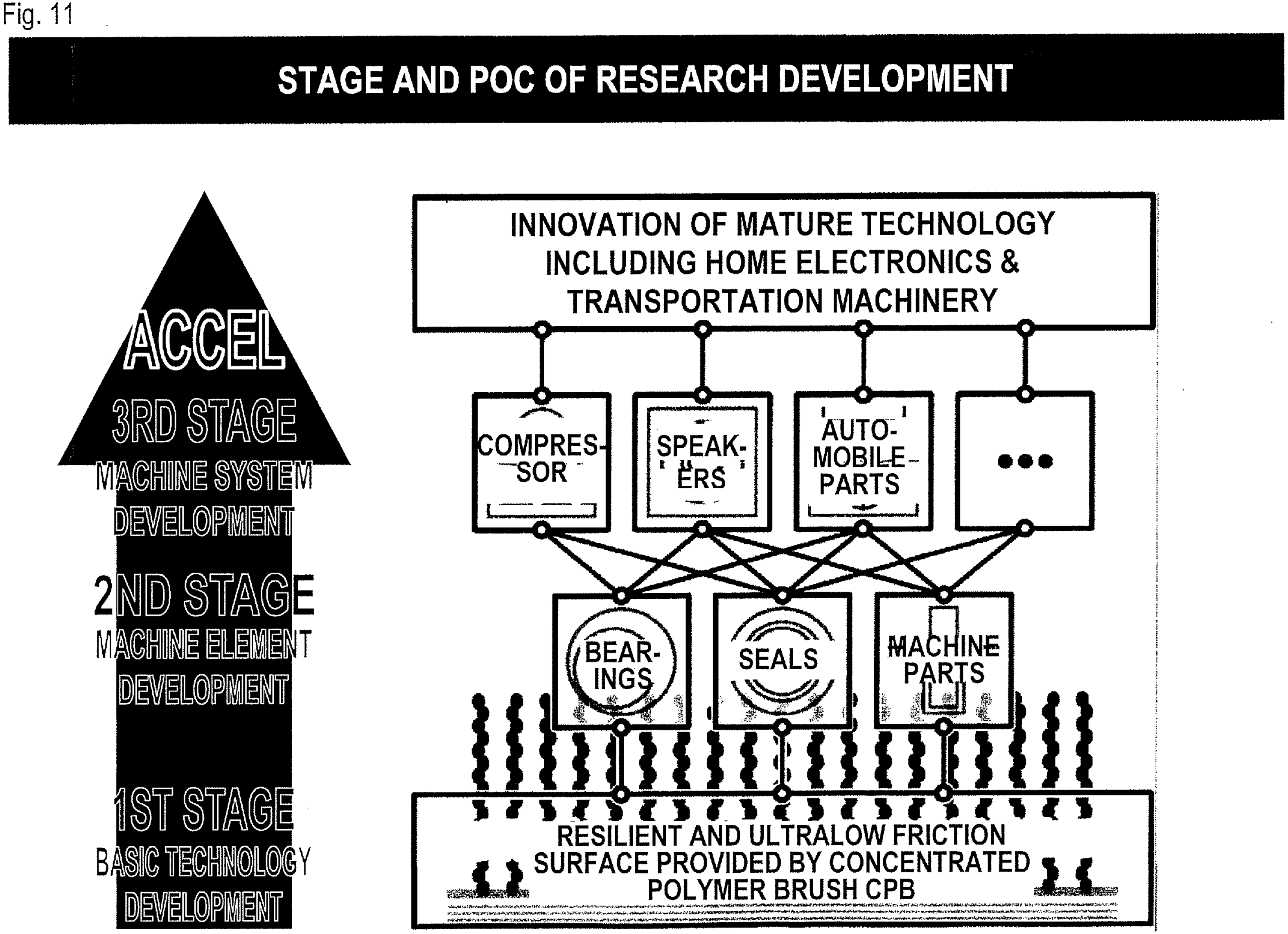
STAGE AND POC OF RESEARCH DEVELOPMENT
ACCEL
3RD STAGE
MACHINE SYSTEM DEVELOPMENT
2ND STAGE
MACHINE ELEMENT DEVELOPMENT
1ST STAGE
BASIC TECHNOLOGY DEVELOPMENT
INNOVATION OF MATURE TECHNOLOGY INCLUDING HOME ELECTRONICS & TRANSPORTATION MACHINERY
COMPRES-SOR
SPEAK-ERS
AUTO-MOBILE PARTS
BEAR-INGS
SEALS
MACHINE PARTS
RESILIENT AND ULTRALOW FRICTION SURFACE PROVIDED BY CONCENTRATED POLYMER BRUSH CPB

Fig. 12

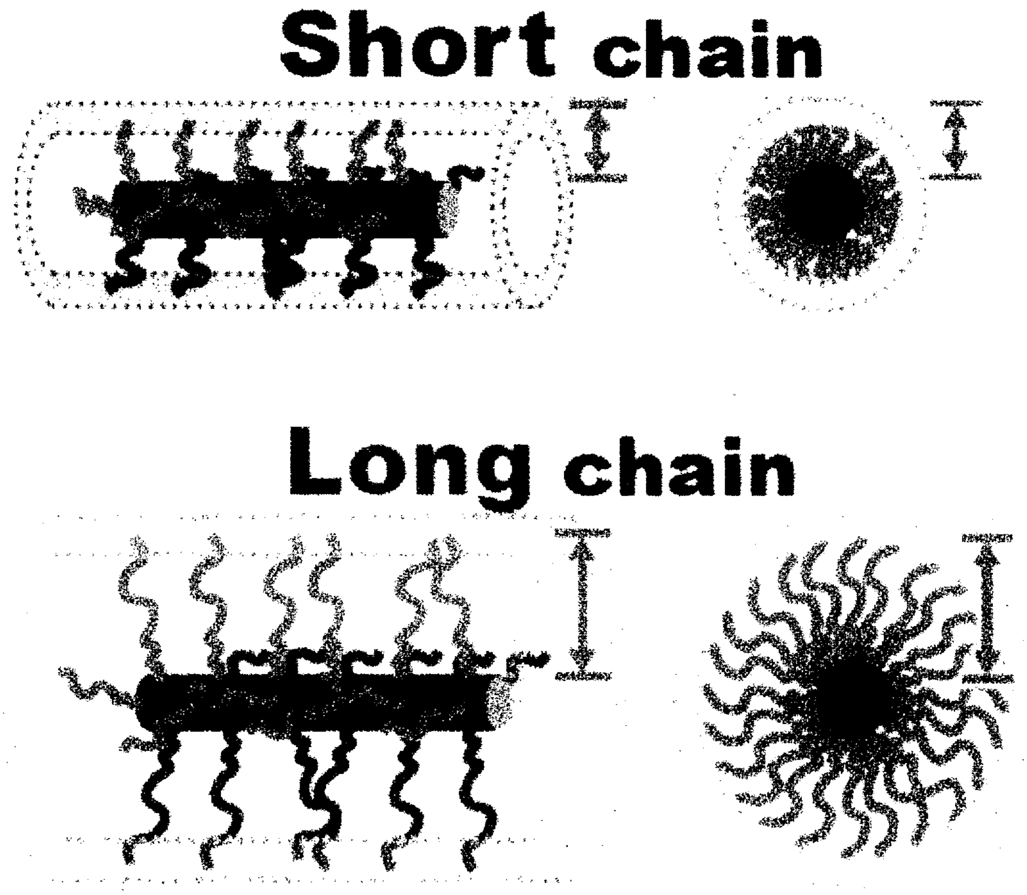


Fig. 13

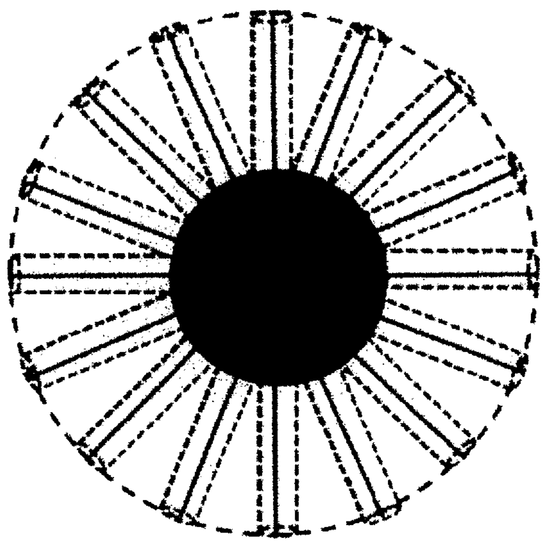

Fig. 14

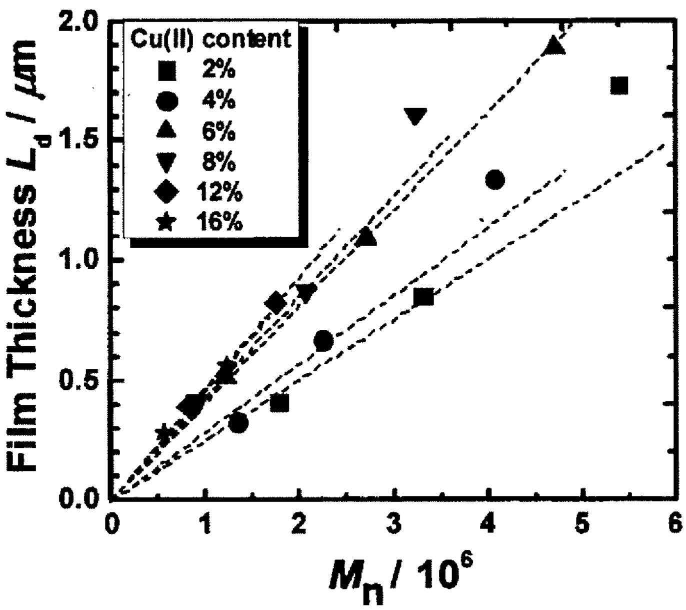


Plot of film thickness $L_d$ vs. number-average molecular weight $M_n$ for the ATRP of MMA at 60°C and 500 MPa; $[EBIB]_0$=0.047mM, $[Cu(I)Br]_0+[Cu(II)Br_2]_0$=16.85mM

Fig. 15

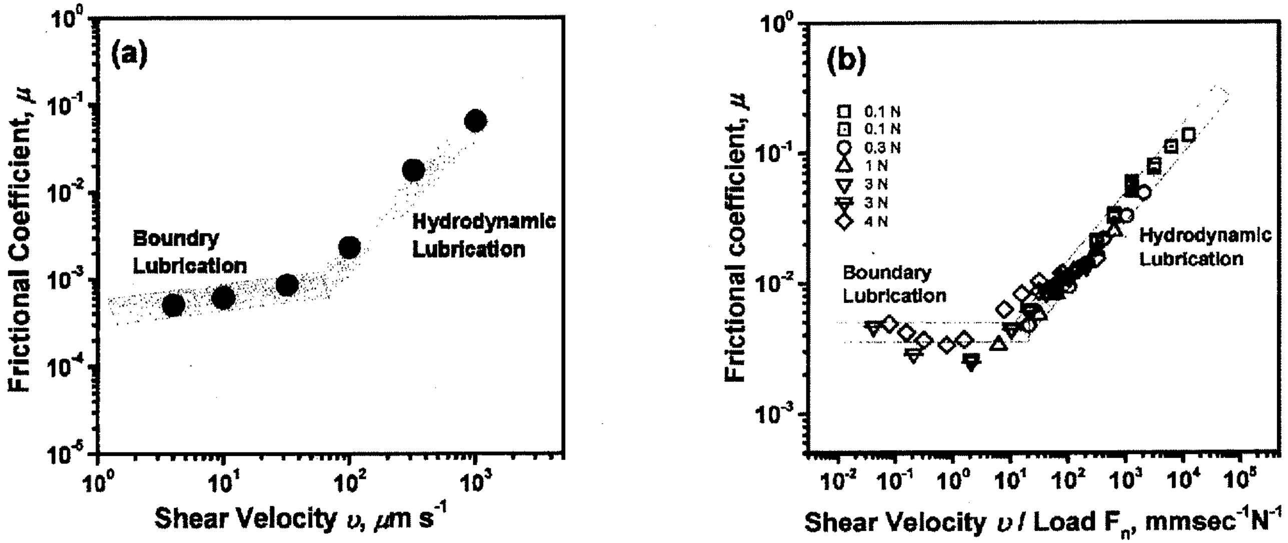


Plots of frictional coefficient $\mu$ vs. (a) shear velocity $\upsilon$ measured at a normal force $F_n$ of 20 nN by AFM (b) $\upsilon / F_n$ measured at a range of $F_n$ from 0.1 to 4 N by tribometer for CPB thick films of PMMA in (a) toluene (b) DEME-TFSI.

Fig. 16

STRIBECK CURVE
BALL-ON-DISC TEST
BY TRIBOMETER (Bruker UMT TribolLab)

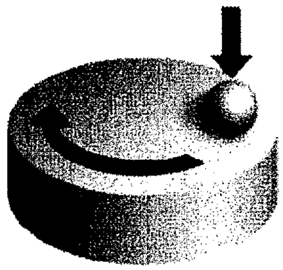

Fig. 17

THICKENED PMMA BRUSH IN IONIC LIQUID (DEME-TFSI) 0.1 TO 4 N

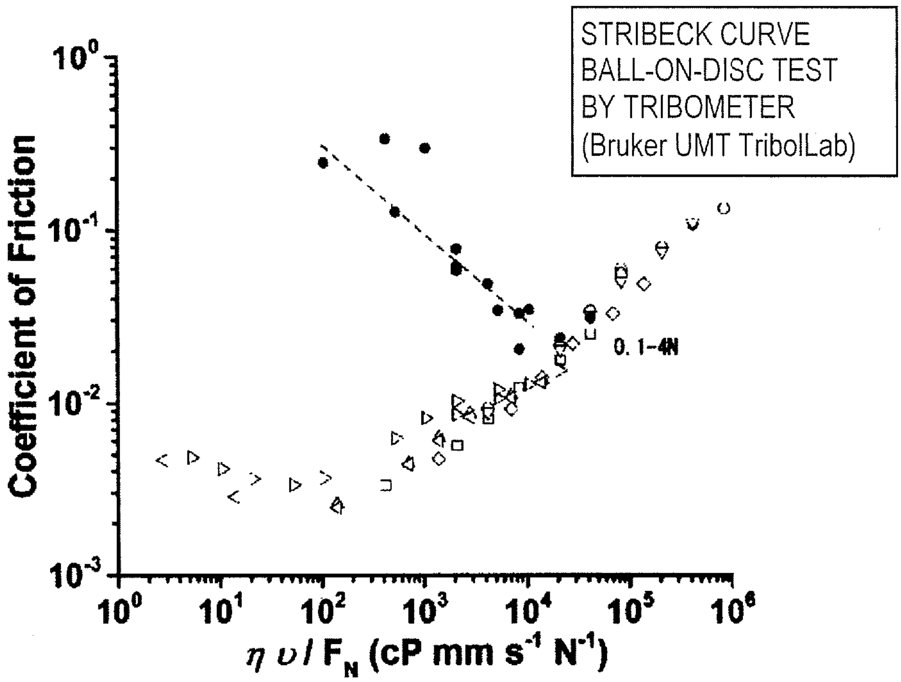

Fig. 18

THICKENED PMMA BRUSH IN IONIC LIQUID (DEME-TFSI) (HIGH LOAD)

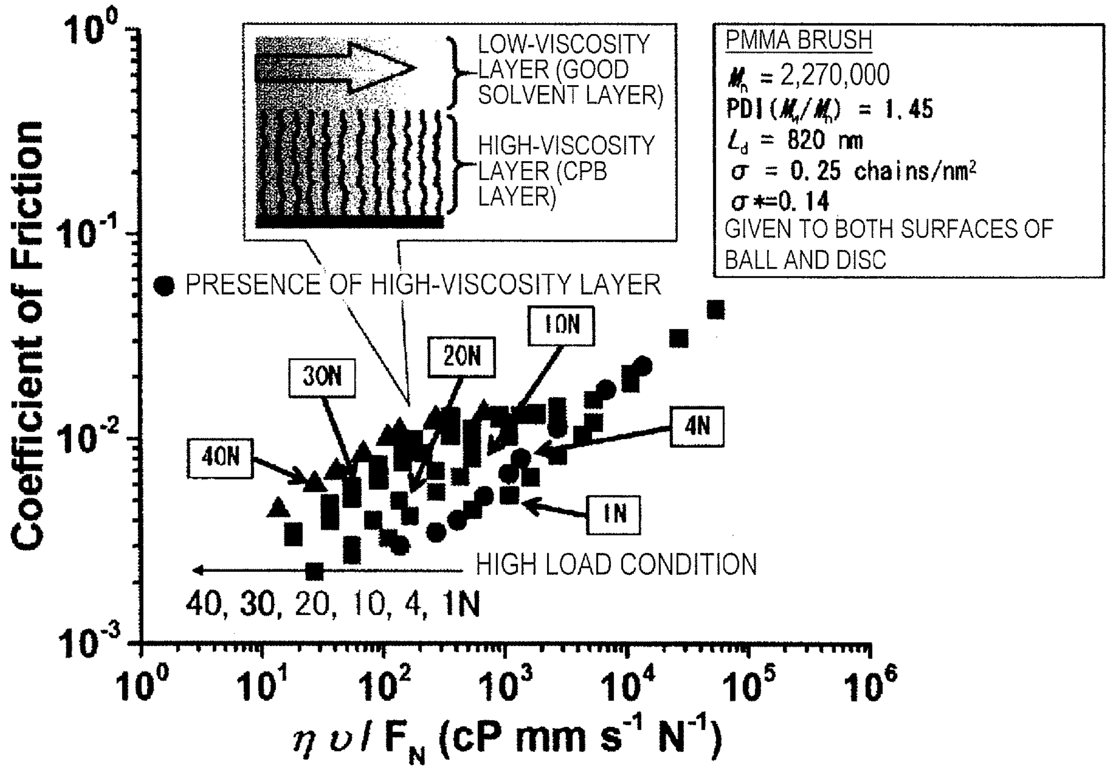


Fig. 19

THICKENED PDEMM-TFSI BRUSH IN IONIC LIQUID (DEME-TFSI) (LOAD: 5 N)

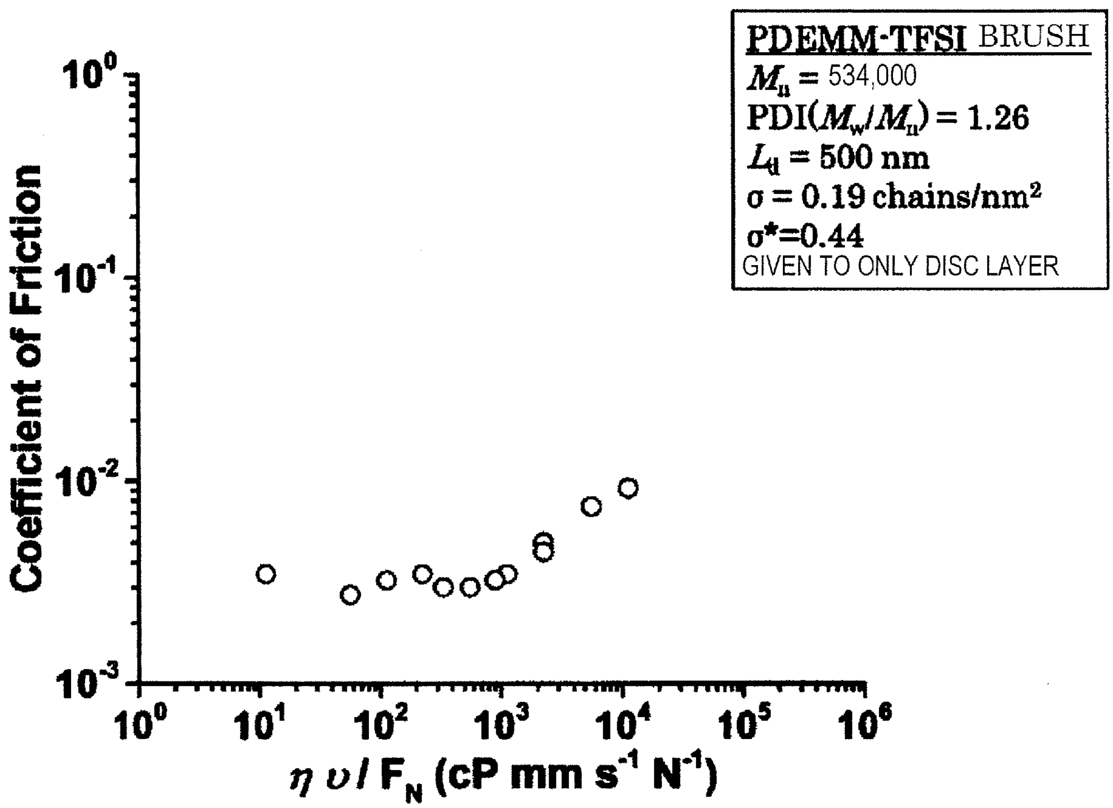

Fig. 20

DATA COMPARISON

• THICKENED PMMA IN DEME-TFSI [HIGH LOAD

• THICKENED PDEMM-TFSI BRUSH IN DEME-TFSI

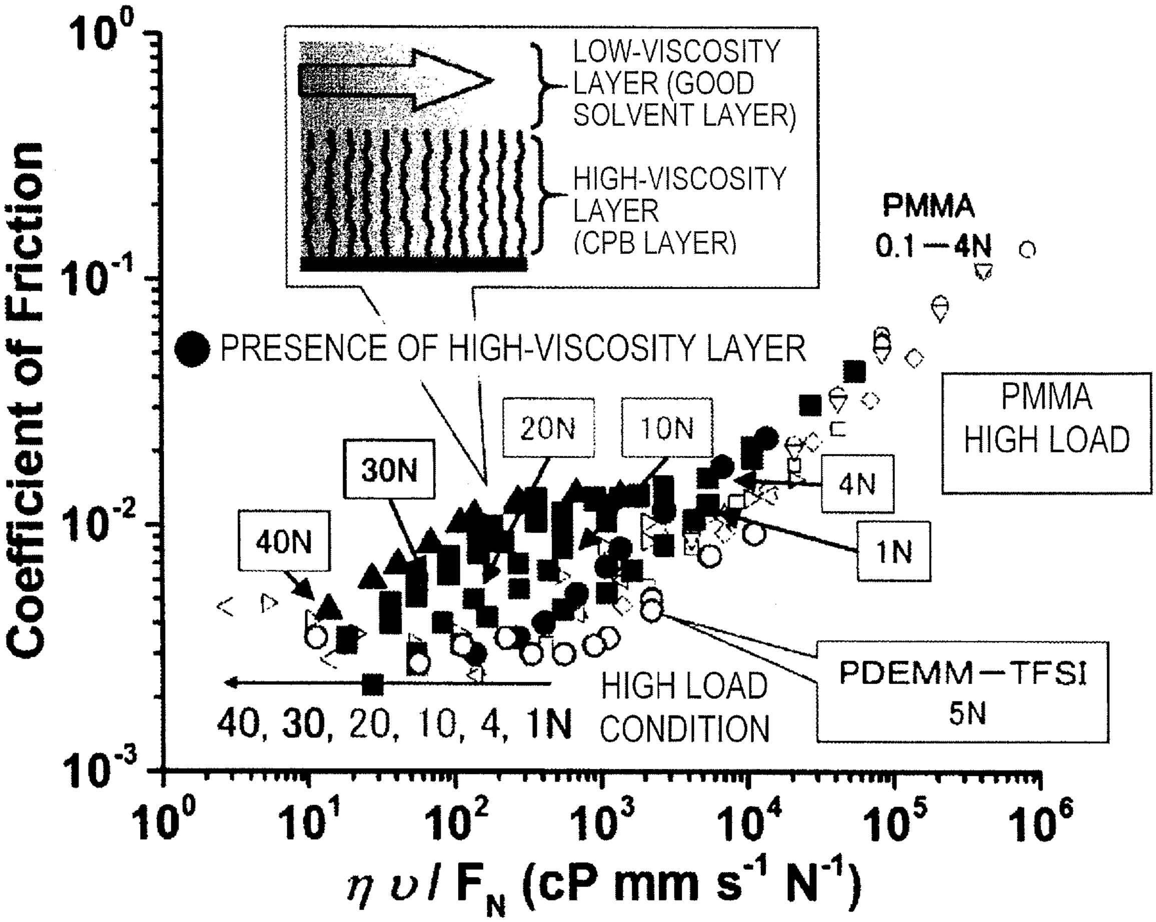

Fig. 21

THICKENED PLMA (LYOPHILIC) BRUSH IN POE LUBRICANT OIL (THREE TYPES) [LOAD: 0.1 N]

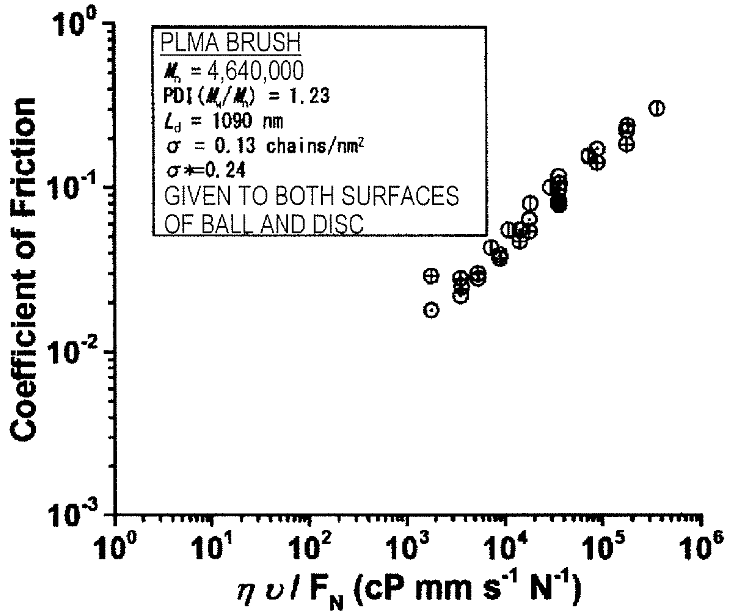


Fig. 22

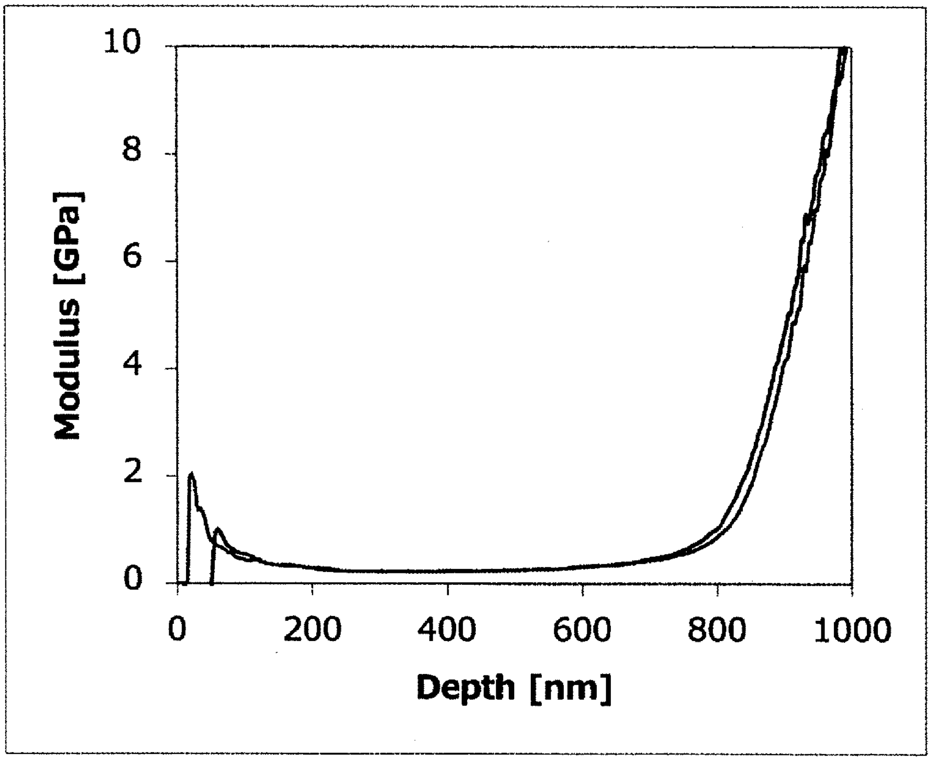

Fig. 23

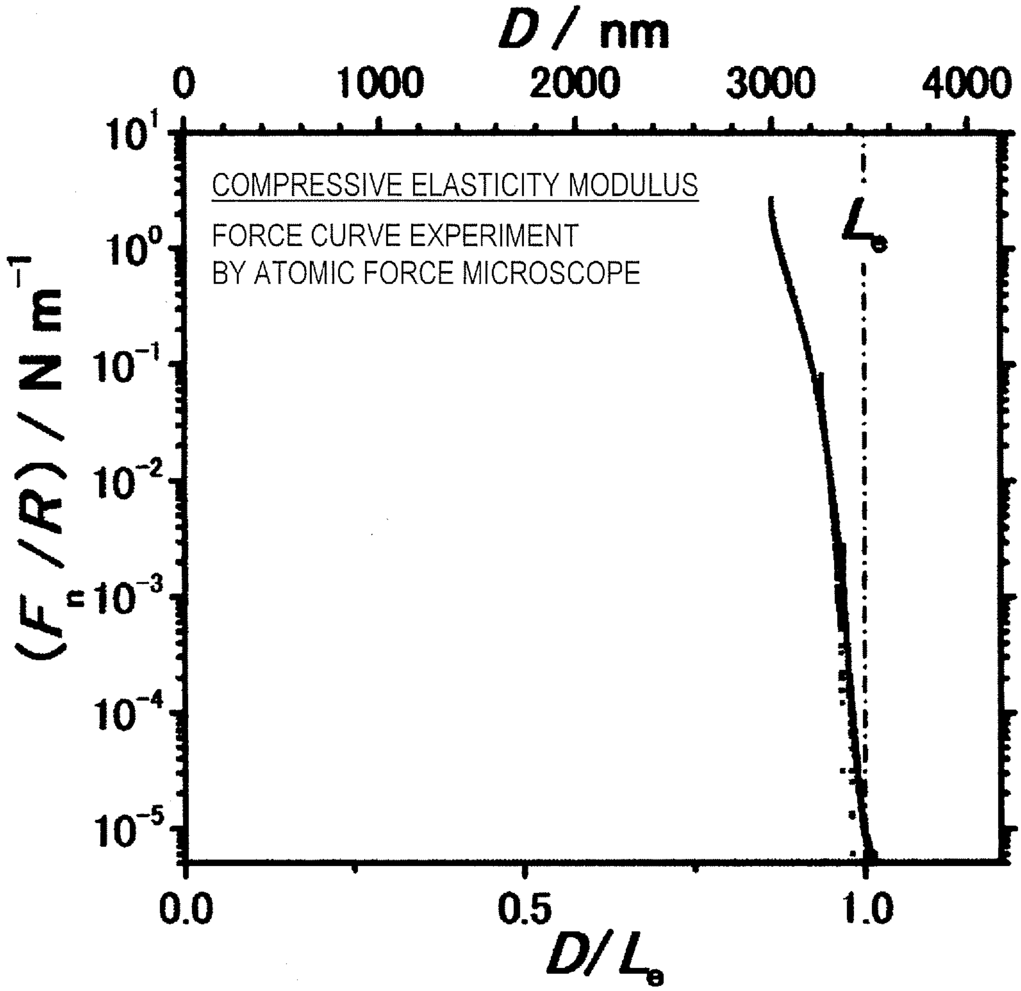
D / nm
0
1000
2000
3000
4000
COMPRESSIVE ELASTICITY MODULUS
FORCE CURVE EXPERIMENT
BY ATOMIC FORCE MICROSCOPE
$L_e$
$(F_n/R)$ / N m$^{-1}$
$10^1$
$10^0$
$10^{-1}$
$10^{-2}$
$10^{-3}$
$10^{-4}$
$10^{-5}$
0.0
0.5
1.0
$D/L_e$

Fig. 24

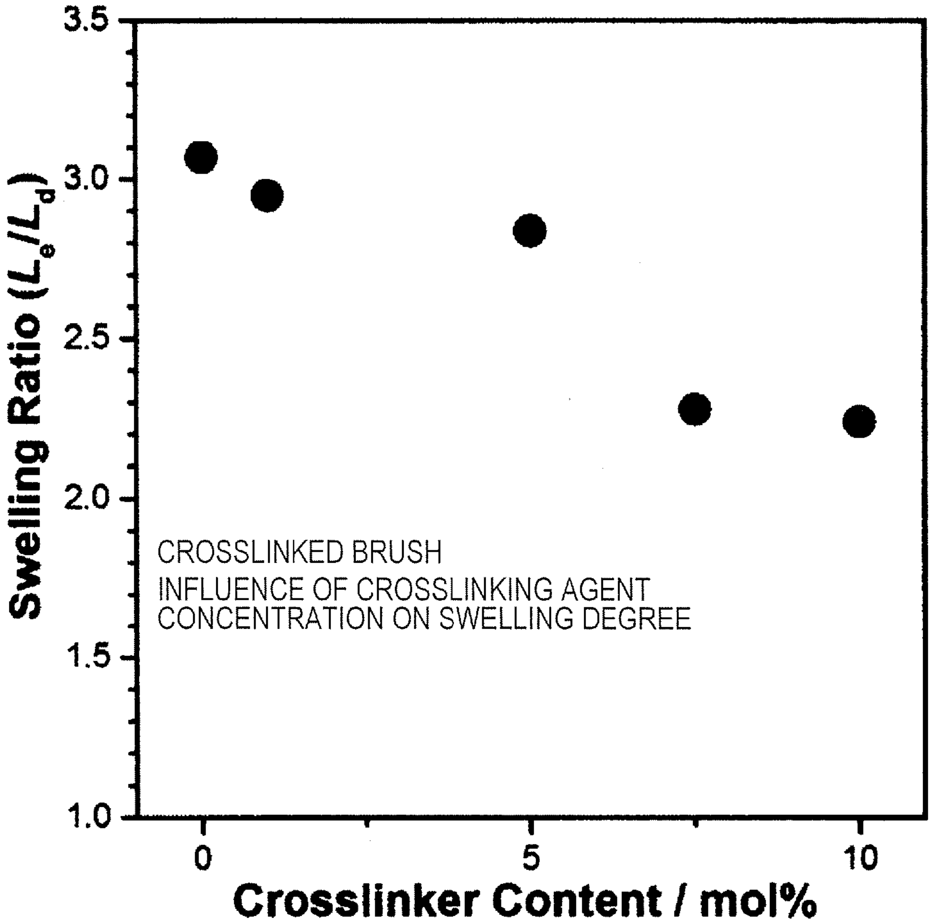
3.5
3.0
2.5
2.0
1.5
1.0
Swelling Ratio ($L_e$/$L_d$)
CROSSLINKED BRUSH
INFLUENCE OF CROSSLINKING AGENT
CONCENTRATION ON SWELLING DEGREE
0
5
10
Crosslinker Content / mol%

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014009059 A1
- JP 3422463 B
- JP 11263819 A
- JP 2006316169 A
- JP 2014169787 A
- WO 2006087839 A


### Non-patent literature cited in the description


- *Nature,* 2003, vol. 425, 163-165
- *J. Am. Chem. Soc.,* 1995, vol. 117, 5614
- *Macromolecules,* 1995, vol. 28, 7901
- *Science,* 1996, vol. 272, 866
- *Macromolecules,* 1998, vol. 31, 5934-5936
- New Experimental Chemistry Course. **FUKUDA, K. et al.** Interface and Colloid. Maruzen, 1977, vol. 18
- **FUKUDA, K. ; SUGI, M. ; SASABE, H.** LB Membrane and Electronics. CMC, 1986
- **ISHII, T.** Practical Technique for Forming Good LB Membrane. Kyoritsu Publishing, 1989
- *Macromolecules,* 2000, vol. 33, 5608-5612
- *Macromolecules,* 2005, vol. 38, 2137-2142
- *Nature,* 2003, vol. 425, 163
- *Adv Colloid Interface Sci,* 1987, vol. 27, 189
- **TSUJII, Y. ; OHNO, K. ; YAMAMOTO, S. ; GOTO, A. ; FUKUDA, T.** Structure and Properties of High-Density Polymer Brushes Prepared by Surface- Initiated Living Radical Polymerization. *Adv. Polym. Sci.,* 2006, vol. 197, 1-45
- **TSUJII, Y. ; NOMURA, A. ; OKAYASU, K. ; GAO, W. ; OHNO, K. ; FUKUDA, T.** AFM studies on microtribology of concentrated polymer brushes in solvents. *J. Phys. Conf. Ser.,* 2009, vol. 184, 012031
- **ARITA, T. ; KAYAMA, Y. ; OHNO, K. ; TSUJII, Y. ; FUKUDA, T.** High-pressure atom transfer radical polymerization of methyl methacrylate for well- defined ultrahigh molecular-weight polymers. *Polymer,* 2008, vol. 49, 2426-2429